# EUROPEAN PATENT APPLICATION

(11) **EP 4 557 785 A1**
(43) Date of publication of application: **21.05.2025**
(21) Application number: 23843351.0
(22) Date of filing: 19.07.2023
(51) Int. Cl.: H04W 8/00, H04W 72/54, H04W 76/14, H04W 88/04

(54) **METHOD AND DEVICE FOR MANAGING RELAY COMMUNICATION THROUGH RELAY TERMINAL BETWEEN TWO REMOTE TERMINALS IN WIRELESS COMMUNICATION SYSTEM**

(30) Priority: 19.07.2022 KR 20220088886
(71) Applicant: Samsung Electronics Co., Ltd., Suwon-si, Gyeonggi-do 16677 (KR)
(72) Inventor: KANG, Hyunjeong, Suwon-si, Gyeonggi-do 16677 (KR); AGIWAL, Anil, Suwon-si, Gyeonggi-do 16677 (KR)
(74) Representative: Gulde & Partner
(86) International application number: PCT/KR2023/010362
(87) International publication number: WO 2024/019505

(57) **Abstract**

The present disclosure relates to a 5G or 6G communication system for supporting higher data transmission rates. **In** the present disclosure, the method performed by a first terminal in a wireless communication system may comprise the steps of: transmitting, to a user equipment to user equipment (U2U) relay terminal, a direct communication request message for a second terminal on the basis of sidelink radio bearer (SLRB) configuration information for relaying communication between the first terminal and the second terminal; performing PC5 security configuration for direct communication with the second terminal; receiving, from the U2U relay terminal, a direct communication accept message for the second terminal; and performing direct communication with the second terminal through the U2U relay terminal.

## Description

### [Technical Field]

The disclosure relates to a wireless communication system. More specifically, the disclosure relates to a method and a device for configuring relay information and an operation of a relay terminal and a terminal that establishes a connection between two terminals, based on a sidelink with the relay terminal in a wireless communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Also, device-to-device direct communication (sidelink communication) using the 5G communication system has been studied, and it is expected that the sidelink communication may be applied to, for example, vehicle communication (vehicle-to everything, hereinafter "V2X") and public safety networks to provide various services to users.

In particular, there is a need for sidelink relay utilization schemes which can support service coverage extensions, data transfer reliability increases, and terminal power consumption reductions.

### [Disclosure on Invention]

### [Technical Problem]

A disclosed embodiment is to provide a device and a method enabling effective provision of a service in a wireless communication system.

The technical subjects pursued in the disclosure may not be limited to the above-mentioned technical subjects, and other technical subjects which are not mentioned may be clearly understood fromthe following descriptions by those skilled in the art to which the disclosure pertains.

### [Solution to Problem]

According to an embodiment of the disclosure, a method performed by a user equipment in a wireless communication system may include identifying a resource for transmitting a sidelink discovery message, identifying a sidelink discovery message to be transmitted, selecting a destination identifier corresponding to the sidelink discovery message, selecting a logical channel corresponding to the selected destination identifier, and allocating the identified resource to the logical channel.

### [Advantageous Effects of Invention]

The disclosure provides a device and a method enabling effective provision of a service in a wireless communication system.

### [Brief Description of Drawings]

FIG. 1A is a diagram illustrating a wireless communication system according to an embodiment of the disclosure;
FIG. 1B is a diagram illustrating a wireless communication system according to an embodiment of the disclosure;
FIG. 2 is a diagram illustrating a configuration of a base station in a wireless communication system according to an embodiment of the disclosure;
FIG. 3 is a diagram illustrating a configuration of a terminal in a wireless communication system according to an embodiment of the disclosure;
FIG. 4 is a diagram illustrating a configuration of a communication unit in a wireless communication system according to an embodiment of the disclosure;
FIG. 5 is a diagram illustrating a structure of time-frequency resources of a wireless communication system according to an embodiment of the disclosure;
FIG. 6 is a diagram illustrating a procedure of processing configuration information for transmitting and receiving signaling and data in a wireless communication system performing direct communication between a terminal and a terminal;
FIG. 7 is a diagram illustrating a procedure of processing configuration information for transmitting and receiving signaling and data in a wireless communication system in which a terminal is connected to a base station through a sidelink relay;
FIG. 8 is a diagram illustrating a procedure of processing configuration information for relay transmission of signaling and data in a wireless communication system in which a terminal and another terminal perform communication through a sidelink relay according to an embodiment of the disclosure;
FIG. 9 is a diagram illustrating processing of a discovery message for discovering a sidelink relay in a wireless communication system in which a terminal and another terminal perform communication through the sidelink relay according to an embodiment of the disclosure;
FIG. 10A is a diagram illustrating an operation of processing a sidelink relay discovery message transmission resource in a wireless communication system in which a terminal and another terminal perform communication through a sidelink relay according to an embodiment of the disclosure;
FIG. 10B is a diagram illustrating an operation of processing a sidelink relay discovery message transmission resource in a wireless communication system in which a terminal and another terminal perform communication through a sidelink relay according to an embodiment of the disclosure;
FIG. 10C is a diagram illustrating an operation of processing a sidelink relay discovery message transmission resource in a wireless communication system in which a terminal and another terminal perform communication through a sidelink relay according to an embodiment of the disclosure;
FIG. 11A is a diagram illustrating an operation of processing transmission of a sidelink relay discovery message in a wireless communication system in which a terminal and another terminal perform communication through a sidelink relay according to an embodiment of the disclosure;
FIG. 11B is a diagram illustrating an operation of processing transmission of a sidelink relay discovery message in a wireless communication system in which a terminal and another terminal perform communication through a sidelink relay according to an embodiment of the disclosure;
FIG. 11C is a diagram illustrating an operation of processing transmission of a sidelink relay discovery message in a wireless communication system in which a terminal and another terminal perform communication through a sidelink relay according to an embodiment of the disclosure;
FIG. 11D is a diagram illustrating an operation of processing transmission of a sidelink relay discovery message in a wireless communication system in which a terminal and another terminal perform communication through a sidelink relay according to an embodiment of the disclosure;
FIG. 11E is a diagram illustrating an operation of processing transmission of a sidelink relay discovery message in a wireless communication system in which a terminal and another terminal perform communication through a sidelink relay according to an embodiment of the disclosure;
FIG. 12 illustrates a signal flow between a sidelink relay and a base station processing sidelink relay configuration information in a wireless communication system in which a terminal and another terminal perform communication through the sidelink relay according to an embodiment of the disclosure; and
FIG. 13 illustrates a signal flow between a terminal and a base station processing sidelink relay configuration information in a wireless communication system in which the terminal and another terminal perform communication through the sidelink relay according to an embodiment of the disclosure.

### [Mode for the Invention]

Hereinafter, exemplary embodiments of the disclosure will be described in detail in conjunction with the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted.

In describing the embodiments in the specification, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

The following detailed description of embodiments of the disclosure is mainly directed to New RAN (NR) as a radio access network and Packet Core (5G system or 5G core network or next generation core (NG Core)) as a core network in the 5G mobile communication standards specified by the 3rd generation partnership project (3GPP) that is a mobile communication standardization group, but based on determinations by those skilled in the art, the main idea of the disclosure may be applied to other communication systems having similar backgrounds through some modifications without significantly departing from the scope of the disclosure.

In the 5G system, a network data collection and analysis function (NWDAF), which is a network function for analyzing and providing data collected in a 5G network, may be defined to support network automation. The NWDAF may collect/store/analyze information from the 5G network and provide the results to unspecified network functions (NFs), and the analysis results may be used independently in each NF.

In the following description, some of terms and names defined in the 3rd generation partnership project long term evolution (3GPP LTE) standards (standards for 5G, NR, LTE, or similar systems) may be used for the convenience of description. However, the disclosure is not limited by these terms and names, and may be applied in the same way to systems that conform other standards.

In the following description, terms referring to signals, terms referring to channels, terms referring to control information, terms referring to network entities, terms referring to device elements, and the like are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. However, they are merely examples thereof, and the base station and the terminal are not limited to these examples. In the disclosure, the term "eNB" may be interchangeably used with the term "gNB" for the sake of descriptive convenience. That is, a base station described as "eNB" may refer to "gNB". In the disclosure, the term "terminal" may refer to not only mobile phones, NB-IoT devices, and sensors, but also various wireless communication devices.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. In the disclosure, the term "eNB" may be interchangeably used with the term "gNB" for the sake of descriptive convenience. That is, a base station described as "eNB" may refer to "gNB". In addition, the term "terminal" may refer to not only mobile phones, NB-IoT devices, and sensors, but also other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also requires a packet error rate of 10-5 or less. Therefore, for the services supporting URLLC, a 5G system must provide a transmit time interval (TTI) shorter than those of other services, and may also require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, mMTC, URLLC, and eMBB as described above are merely an example of different types of services, and service types to which the disclosure is applied are not limited to those mentioned above.

Furthermore, in the following description of embodiments of the disclosure, an LTE, LTE-A, LTE-Pro, or NR system will be described by way of example, but the embodiments of the disclosure may be applied to other communication systems having similar backgrounds or channel types. In addition, based on determinations by those skilled in the art, the embodiments of the disclosure may be applied to other communication systems through some modifications without significantly departing from the scope of the disclosure.

Hereinafter, the operation principle of the disclosure will be described in detail in conjunction with the accompanying drawings. The terms which will be described below are terms defined in consideration of the functions in the disclosure, and may be different according to users, intentions of the users, or customs. Therefore, the definitions of the terms should be made based on the contents throughout the specification.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

Furthermore, as used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

Furthermore, the embodiments of the disclosure will be described using terms employed in some communication standards (e.g., the 3rd generation partnership project (3GPP)), but they are for illustrative purposes only. The embodiments of the disclosure may be easily applied to other communication systems through modifications.

Hereinafter, the disclosure relates to a method and a device in which a terminal processes connection establishment with another terminal through a sidelink relay in a wireless communication system. The disclosure relates to a method and a device in which a sidelink relay obtains configuration information required for relaying data/signaling between a terminal and another terminal in a wireless communication system. The disclosure relates to a method and a device for processing a relay discovery message that discovers a sidelink relay supporting connection between a terminal and another terminal in a wireless communication system.

Specifically, the disclosure provides a method in which a terminal determines whether to perform, through a sidelink relay, a direct communication connection establishment procedure with another terminal, determines whether to obtain, through the sidelink relay, configuration information for transmitting and receiving direct communication connection establishment messages to or from the other terminal, and obtains the configuration information for transmitting and receiving the direct communication connection establishment messages. The disclosure provides a method in which, in a case where a terminal is required to establish a connection with another terminal through a sidelink relay, the terminal determines whether the terminal needs to obtain a discovery message from the sidelink relay or transmit a discovery message for discovering the sidelink relay, and when a discovery message is obtained from the sidelink relay or a discovery message for discovering the sidelink relay is transmitted, processes transmission of a sidelink discovery message or reception of a sidelink discovery message.

Embodiments of the disclosure may enable a terminal to transmit and receive data/signaling to or from another terminal through a sidelink relay so as to expand service coverage, increase the reliability of data transmission and reception, and minimize the battery usage of the terminal.

The disclosure relates to a communication technique for converging IoT technology with 5th generation (5G) or pre-5G communication systems designed to support a higher data transfer rate beyond 4th generation (4G) systems such as long term evolution (LTE) systems, and a system therefor. The disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology.

The disclosure may provide a method and a device for processing a signaling of discovering a sidelink relay so that a terminal establishes a connection with another terminal through a sidelink relay in a wireless communication system. In addition, the disclosure may provide a method and a device for processing configuration information enabling a sidelink relay to relay data/signaling between a terminal and another terminal in a wireless communication system.

Advantageous effects obtainable from the disclosure may not be limited to the above-mentioned effects, and other effects which are not mentioned may be clearly understood from the following descriptions by those skilled in the art to which the disclosure pertains.

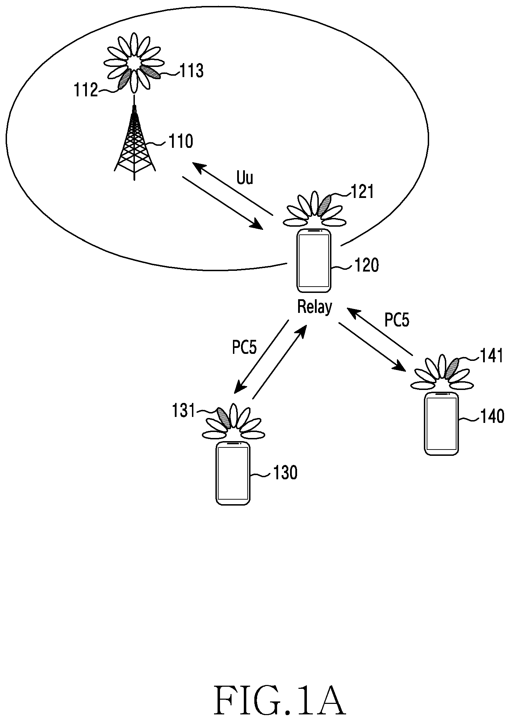

FIG. 1A is a diagram illustrating a wireless communication system according to an embodiment of the disclosure.

FIG. 1A illustrates an example of, as some of nodes using wireless channels in a wireless communication system, a base station 110, terminals 130 and 140, and a sidelink relay 120 capable of relaying data transmission and reception between the base station and the terminals. According to an embodiment of the disclosure, the sidelink relay may be a UE-to-network (U2N) relay. In addition, although FIG. 1A illustrates only one base station, another base station identical to or similar to the base station 110 may be further included, and more relays may be included. That is, the configuration of the wireless communication system illustrated in FIG. 1A is an example, and may further include other elements not illustrated in FIG. 1A.

According to an embodiment of the disclosure, the base station 110 may be a network infrastructure that provides wireless access to the terminals 130 and 140 and the relay 120. The base station 110 has a coverage defined as a particular geographic area, based on a distance by which the base station is able to transmit a signal. The base station 110 may be also called "an access point (AP)", "an eNodeB (eNB)", "a 5th generation (5G) node", "a gNodeB (next generation node B, gNB)", "a wireless point", "a transmission/reception point (TRP)" or other terms having a technical meaning equivalent thereto.

According to an embodiment of the disclosure, the relay 120 is a device used by a user or a network infrastructure, and may perform communication with the base station 110 through a wireless channel. A link oriented from the base station 110 to the relay 120 is referred to as a downlink (DL), and a link oriented from the relay 120 to the base station 110 may be referred to as an uplink (UL). The base station 110 and the relay 120 may be connected via a Uu interface. An uplink (UL) may indicate a wireless link through which the relay 120 transmits data or a control signal to the base station 110, and a downlink (DL) may indicate a wireless link through which the base station 110 transmits data or a control signal to the relay 120.

In addition, the relay 120 may perform communication with the terminals 130 and 140 through wireless channels. A link between the relay 120 and the terminal 130 a link between the relay 120 and the terminal 140 are called sidelinks, and a sidelink may also be called a PC5 interface.

According to an embodiment of the disclosure, each of the terminals 130 and 140 is a device used by a user and may perform communication with the base station 110 through a wireless channel or perform communication with a network through the relay 120 and a wireless channel.

In the disclosure, each of the terminals 130 and 140 may perform communication through a wireless channel with the relay 120. At least one of the terminals 130 and 140 may be operated without involvement of a user. That is, at least one of the terminals 130 and 140 is a device performing machine-type communication (MTC) and may not be carried by a user. Each of the terminals 130 and 140 may be called "a user equipment (UE)", "a mobile station", "a subscriber station", "a remote terminal', "a wireless terminal", "a user device", or other terms having a technical meaning equivalent thereto.

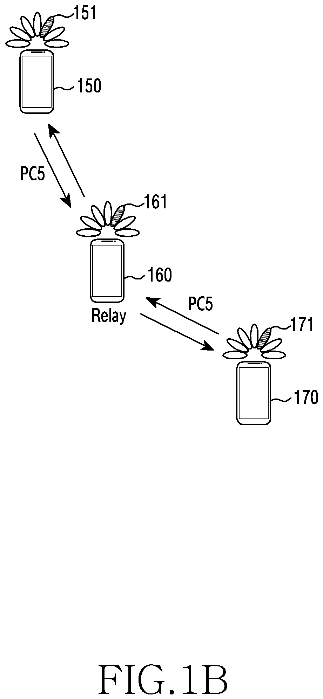

FIG. 1B is a diagram illustrating a wireless communication system according to an embodiment of the disclosure.

FIG. 1B illustrates a wireless communication system including, as some of nodes using wireless channels in the wireless communication system, terminals 150 and 170 and a sidelink relay 160 capable of relaying data transmission and reception between the terminals. The sidelink relay 160 may be a UE-to-UE (U2U) relay. A wireless communication system is not limited to the above example. That is, the configuration of the wireless communication system illustrated in FIG. 1B is an example, and may further include other elements not illustrated in FIG. 1B.

According to an embodiment of the disclosure, the relay 160 may perform communication with the terminals 150 and 170 through wireless channels. A link between the relay 160 and the terminal 150 a link between the relay 160 and the terminal 170 are called sidelinks, and a sidelink may also be called a PC5 interface.

According to an embodiment of the disclosure, each of the terminals 150 and 170 is a device used by a user and may perform direct communication through a wireless channel or perform communication with the counterpart terminal through the relay 160 and a wireless channel. A link between the terminal 150 and the terminal 170, a link between the terminal 150 and the relay 160, and a link between the terminal 170 and the relay 160 are called sidelinks, and a sidelink may also be called a PC5 interface.

In addition, at least one of the terminals 150 and 170 may be operated without involvement of a user. That is, at least one of the terminals 150 and 170 is a device performing machine-type communication (MTC) and may not be carried by a user. Each of the terminals 150 and 170 may be called "a user equipment (UE)", "a mobile station", "a subscriber station", "a remote terminal', "a wireless terminal", "a user device", or other terms having a technical meaning equivalent thereto.

In the following description, an uplink or downlink may be called a Uu interface, and a sidelink may be called PC5.

The base station 110, the relays 120 and 160, and the terminals 130, 140, 150, and 170 illustrated in FIG. 1A and FIG. 1B may transmit and receive a wireless signal in a millimeter wave (mmWave) band (e.g., 28 GHz, 30 GHz, 38 GHz, and 60 GHz). In order to improve channel gain, the base station 110, the relays 120 and 160, and the terminals 130, 140, 150, and 170 may perform beamforming. Here, beamforming may include transmission beamforming and reception beamforming. That is, the base station 110, the relays 120 and 160, and the terminals 130, 140, 150, and 170 may give directivity to a transmission signal or a reception signal. To this end, the base station 110, the relays 120 and 160, and the terminals 130, 140, 150, and 170 may select serving beams 112, 113, 121, 131, 141, 151, 161, and 171 through a beam search or beam management procedure. After the serving beams 112, 113, 121, 131, 141, 151, 161, and 171 are selected, communication may be performed through resources having a quasi-co-located (QCL) relation with resources on which the serving beams 112, 113, 121, 131, 141, 151, 161, and 171 have been transmitted.

According to an embodiment of the disclosure, if large-scale characteristics of a channel having transferred a symbol on a first antenna port are inferable from a channel having transferred a symbol on a second antenna port, the first antenna port and the second antenna port may be assessed as having a QCL relation. For example, the large-scale characteristics may include at least one of delay spread, Doppler spread, Doppler shift, average gain, average delay, and spatial receiver parameter.

The terminals 130, 140, 150, and 170 illustrated in FIG. 1A and 1B may support vehicle communication. In a case of vehicle communication, in an LTE system, standardization work for vehicle-to-everything (V2X) technology has been completed in 3GPP release 14 and 15, based on a device-to-device (D2D) communication structure. Based on 5G NR, standardization work for V2X technology has been completed in 3GPP release 16.

NR V2X supports terminal-to-terminal unicast communication, groupcast (or multicast) communication, and broadcast communication. In addition, unlike LTE V2X aiming to transmit and receive basic safety information required for road driving of a vehicle, NR V2X aims to provide further-evolved services such as platooning, advanced driving, an extended sensor, and remote driving. A V2X service may be classified into a basic safety service and an advanced service.

The basic safety service may include a detailed service such as a car notification (cooperative awareness messages (CAMs) or basic safety messages (BSMs)) service, a left-turn notification service, a front-car collision warning service, an emergency car access notification service, a front obstacle warning service, an intersection traffic light information service. V2X information may be transmitted and received using a broadcast, unicast, or groupcast transmission method.

The advanced service not only has enhanced quality of service (QoS) requirements compared to the basic safety service, but also requires a method enabling transmission and reception of V2X information by using unicast and groupcast transmission methods rather than a broadcast transmission method, so as to enable V2X information to be transmitted and received in a particular vehicle group or between two vehicles. The advanced service may include a detailed service such as a platooning service, a self-driving service, a remote driving service, and an extended sensor-based V2X service. In addition, NR V2X may support a direct communication service between terminals in a region having no network infrastructure so as to provide a public safety service.

Hereinafter, a sidelink (SL) indicates a transmission/reception path for a signal between terminals or a transmission/reception path for a signal between a terminal and a relay, and may be used together with a PC5 interface.

Hereinafter, a base station is a subject performing resource allocation for a terminal and a relay, and may be a base station supporting both V2X communication and general cellular communication, or a base station supporting only V2X communication. That is, a base station may imply an NR base station (e.g., gNB), an LTE base station (e.g., eNB), or a road side unit (RSU).

A terminal may include not only a general user equipment and a mobile station but also all of a vehicle supporting vehicle-to-vehicle (V2V) communication, a vehicle or a pedestrian's handset (e.g., smartphone) supporting vehicle-to-pedestrian (V2P) communication, a vehicle supporting vehicle-to-network (V2N) communication, or a vehicle supporting communication between a vehicle and a transportation infrastructure (vehicle-to-infrastructure (V2I) communication), and a road side unit (RSU) equipped with a terminal function, an RSU equipped with a base station function, or an RSU equipped with some of base station functions and some of terminal functions.

In the disclosure, a terminal may indicate a vehicle supporting vehicle-to-vehicle (V2V) communication, a vehicle or a pedestrian's handset (e.g., smartphone) supporting vehicle-to-pedestrian (V2P) communication, a vehicle supporting vehicle-to-network (V2N) communication, or a vehicle supporting vehicle-to-infrastructure (V2I) communication. A terminal may mean a user device supporting device-to-device communication of a public safety net.

In addition, a terminal in the disclosure, may refer to a road side unit (RSU) equipped with a terminal function, an RSU equipped with a base station function, or an RSU equipped with some of base station functions and some of terminal functions.

A relay in the disclosure, may denote a vehicle supporting V2X communication or a user device supporting device-to-device communication of a public safety net. In addition, a relay in the disclosure may refer to a device equipped with a terminal function, a device equipped with a base station function, or a device equipped with some of terminal functions and some of base station functions.

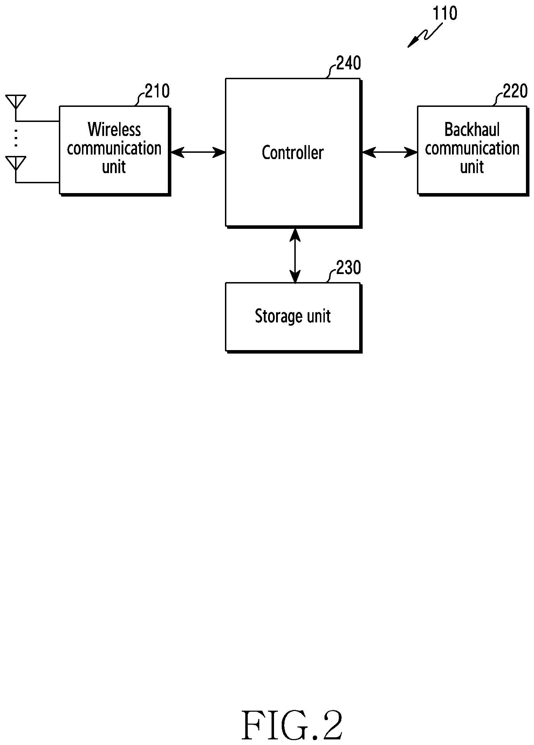

FIG. 2 is a diagram illustrating a configuration of a base station in a wireless communication system according to an embodiment of the disclosure.

The configuration illustrated in FIG. 2 may be understood as a configuration of the base station 110. The term "... unit" or the terms including the suffixes "-or", "-er", or the like used hereinafter may mean a unit of processing at least one function or operation, and this may be embodied by hardware, software, or a combination of hardware and software.

Referring to FIG. 2, the base station 110 may include a wireless communication unit 210, a backhaul communication unit 220, a storage unit 230, and a controller 240. However, the elements of the base station 110 are not limited to the illustrated example. For example, the base station may also include more or fewer elements than the elements described above. In addition, the wireless communication unit 210, the backhaul communication unit 220, the storage unit 230, and the controller 240 may be implemented in a single chip type. In addition, the controller 240 may include one or more processors.

The wireless communication unit 210 performs functions for transmitting or receiving a signal through a wireless channel. For example, the wireless communication unit 210 may perform a function of conversion between a baseband signal and a bitstream according to a physical layer specification of a system. For example, at the time of data transmission, the wireless communication unit 210 may generate complex symbols by encoding and modulating a transmission bitstream. In addition, at the time of data reception, the wireless communication unit 210 may reconstruct a reception bitstream by demodulating and decoding a baseband signal.

In addition, the wireless communication unit 210 up-converts a baseband signal into a radio-frequency (RF) band signal and then transmits the converted RF band signal through an antenna, and down-converts an RF band signal received through an antenna into a baseband signal. To this end, the wireless communication unit 210 may include a transmission filter, a reception filter, an amplifier, a mixer, an oscillator, a digital-to-analog converter (DAC), an analog-to-digital converter (ADC), and the like. In addition, the wireless communication unit 210 may include multiple transmission/reception paths. Furthermore, the wireless communication unit 210 may include at least one antenna array configured by multiple antenna elements.

In view of hardware, the wireless communication unit 210 may be configured by a digital unit and an analog unit, and the analog unit may be configured by multiple sub-units according to operating power, operating frequency, etc. The digital unit may be implemented as at least one processor (e.g., a digital signal processor (DSP)).

The wireless communication unit 210 transmits and receives a signal as described above. Accordingly, the entirety or a part of the wireless communication unit 210 may be called "a transmitter", "a receiver", or "a transceiver". Furthermore, in the following description, transmission and reception performed through a wireless channel is used as a meaning of including the above processing being performed by the wireless communication unit 210.

The backhaul communication unit 220 may provide an interface for performing communication with other nodes within a network. That is, the backhaul communication unit 220 may convert, into a physical signal, a bitstream transmitted from the base station 110 to another node, for example, another access node, another base station, a higher node, a core network, etc., and convert a physical signal received from another node into a bitstream.

The storage unit 230 may store data such as a basic program, an application program, and configuration information for an operation of the base station 110. The storage unit 230 may be configured by a volatile memory, a nonvolatile memory, or a combination of a volatile memory and a nonvolatile memory. The storage unit 230 may provide stored data in response to a request of the controller 240.

The controller 240 may control overall operations of the base station 110. For example, the controller 240 may transmit and receive a signal through the wireless communication unit 210 or the backhaul communication unit 220. In addition, the controller 240 records and reads data in and from the storage unit 230. In addition, the controller 240 may perform functions of a protocol stack required in a communication specification. According to another embodiment, the protocol stack may be included in the wireless communication unit 210. To this end, the controller 240 may include at least one processor. According to embodiments, the controller 240 may control the base station 110 to perform operations according to embodiments described later.

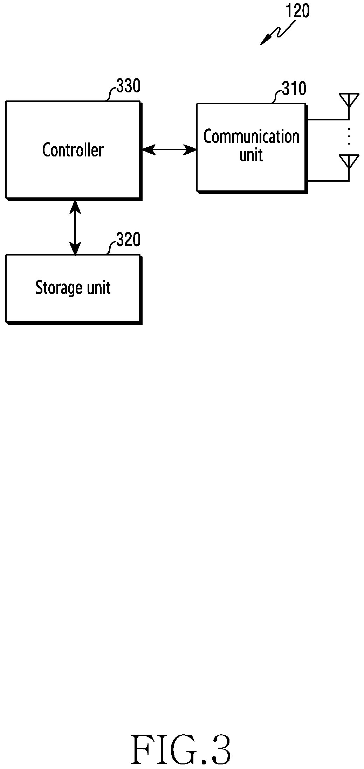

FIG. 3 is a diagram illustrating a configuration of a terminal in a wireless communication system according to an embodiment of the disclosure.

The terminal including the configuration illustrated in FIG. 3 may correspond to the sidelink relay 120 in FIG. 1A, and may correspond to the terminal 130, 140, 150, or 170 in FIG. 1A and FIG. 1B.

The configuration illustrated in FIG. 3 may be understood as a configuration of the sidelink relay 120 or the terminal 130, 140, 150, or 170. The term "... unit" or the terms including the suffixes "-or", "-er", or the like used hereinafter may mean a unit of processing at least one function or operation, and this may be embodied by hardware, software, or a combination of hardware and software.

Referring to FIG. 3, the sidelink relay 120 and a terminal may each include a communication unit 310, a storage unit 320, and a controller 330. The elements of the terminal are not limited to the above example. For example, the terminal may also include more or fewer elements than the elements described above. In addition, the communication unit 310, the storage unit 320, and the controller 330 may be implemented in a single chip type. In addition, the controller 330 may include one or more processors.

The communication unit 310 performs functions for transmitting or receiving a signal through a wireless channel. For example, the communication unit 310 may perform a function of conversion between a baseband signal and a bitstream according to a physical layer specification of a system. For example, at the time of data transmission, the communication unit 310 generates complex symbols by encoding and modulating a transmission bitstream. In addition, at the time of data reception, the communication unit 310 may reconstruct a reception bitstream by demodulating and decoding a baseband signal. In addition, the communication unit 310 may up-convert a baseband signal into an RF band signal and then transmit the converted RF band signal through an antenna, and down-convert an RF band signal received through an antenna into a baseband signal. For example, the communication unit 310 may include a transmission filter, a reception filter, an amplifier, a mixer, an oscillator, a DAC, an ADC, and the like.

In addition, the communication unit 310 may include multiple transmission/reception paths. Furthermore, the communication unit 310 may include at least one antenna array including multiple antenna elements. In view of hardware, the communication unit 310 may be configured by a digital circuit and an analog circuit (e.g., radio-frequency integrated circuit (RFIC)). The digital circuit and the analog circuit may be implemented as a single package. In addition, the communication unit 310 may include multiple RF chains. Moreover, the communication unit 310 may perform beamforming.

The communication unit 310 may transmit and receive a signal as described above. Accordingly, the entirety or a part of the communication unit 310 may be called "a transmitter", "a receiver", or "a transceiver". Furthermore, in the following description, transmission and reception performed through a wireless channel is used as a meaning of including the above processing being performed by the communication unit 310.

The storage unit 320 may store data such as a basic program, an application program, and configuration information for an operation of the terminal. The storage unit 320 may be configured by a volatile memory, a nonvolatile memory, or a combination of a volatile memory and a nonvolatile memory. The storage unit 320 provides stored data according to a request of the controller 330.

The controller 330 controls overall operations of the terminal. For example, the controller 330 may transmit and receive a signal through the communication unit 310. In addition, the controller 330 records and reads data in and from the storage unit 320. In addition, the controller 330 may perform functions of a protocol stack required in a communication specification. To this end, the controller 330 may include at least one processor or microprocessor, or may be a part of a processor. In addition, the controller 330 and a part of the communication unit 310 may be called a communication processor (CP). According to embodiments, the controller 330 may control the terminal to perform operations according to embodiments described later.

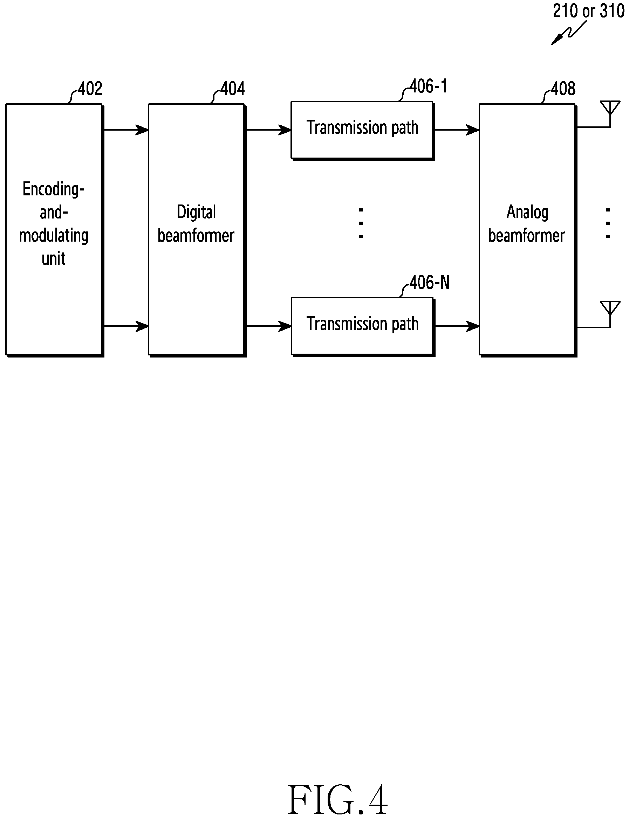

FIG. 4 is a diagram illustrating a configuration of a communication unit in a wireless communication system according to an embodiment of the disclosure.

FIG. 4 illustrates an example of a specific configuration of the wireless communication unit 210 illustrated in FIG. 2 or the communication unit 310 illustrated in FIG. 3. Specifically, FIG. 4 illustrates elements for performing beamforming, which are a part of the wireless communication unit 210 in FIG. 2 or the communication unit 310 in FIG. 3.

Referring to FIG. 4, the wireless communication unit 210 or the communication unit 310 may include an encoding-and-modulating unit 402, a digital beamformer 404, multiple transmission paths 406-1 to 406-N, and an analog beamformer 408.

The encoding-and-modulating unit 402 may perform channel encoding. For channel encoding, at least one of a low density parity check (LDPC) code, a convolution code, and a polar code may be used. The encoding-and-modulating unit 402 generates modulation symbols by performing constellation mapping.

The digital beamformer 404 may perform beamforming for a digital signal (e.g., modulation symbols). To this end, the digital beamformer 404 multiplies the modulation symbols by beamforming weights. The beamforming weights are used for changing the size and the phase of a signal, and may be called "a precoding matrix", "a precoder", etc. The digital beamformer 404 may output digital-beamformed modulation symbols to the multiple transmission paths 406-1 to 406-N. According to a multiple input multiple output (MIMO) transmission technique, the modulation symbols may be multiplexed, or the same modulation symbol may be provided to the multiple transmission paths 406-1 to 406-N.

The multiple transmission paths 406-1 to 406-N may convert digital-beamformed digital signals into analog signals. To this end, each of the multiple transmission paths 406-1 to 406-N may include an inverse fast Fourier transform (IFFT) calculator, a cyclic prefix (CP) inserter, a digital to analog converter (DAC), and an up converter. The CP inserter is designed for an orthogonal frequency division multiplexing (OFDM) method, and may be excluded in a case where a different physical layer method (e.g., filter bank multi-carrier (FBMC)) is applied. That is, the multiple transmission paths 406-1 to 406-N may provide independent signal processing processes for multiple streams generated through digital beamforming, respectively. However, according to an implementation method, a part of the elements of the multiple transmission paths 406-1 to 406-N may be shared.

The analog beamformer 408 may perform beamforming on an analog signal. To this end, the digital beamformer 404 may multiply analog signals by beamforming weights. The beamforming weights are used for changing the size and the phase of a signal. Specifically, according to a connection structure between the multiple transmission paths 406-1 to 406-N and antennas, the analog beamformer 408 may be variously configured. For example, each of the multiple transmission paths 406-1 to 406-N may be connected to one antenna array. As another example, the multiple transmission paths 406-1 to 406-N may be connected to one antenna array. As yet other example, the multiple transmission paths 406-1 to 406-N may be adaptively connected to one antenna array or two or more antenna arrays.

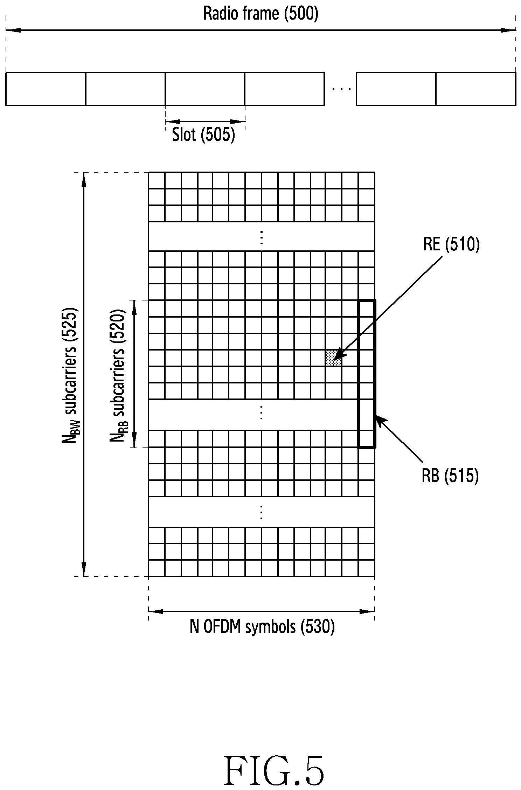

FIG. 5 is a diagram illustrating a structure of time-frequency resources of a wireless communication system according to an embodiment of the disclosure.

Referring to FIG. 5, in a wireless resource area, the horizontal axis indicates a time domain and the vertical axis indicates a frequency domain. A minimum transmission unit in the time domain is an OFDM symbol or a DFT-S-OFDM symbol, and N_{symb} OFDM symbols or DFT-S-OFDM symbols 530 may be included in one slot 505. Unlike a slot, the length of a subframe in an NR system may be defined as 1.0 ms, and the length of a radio frame 500 may be defined as 10 ms. A minimum transmission unit in the frequency domain is a subcarrier, and the bandwidth of the entire system transmission band (transmission bandwidth) may include a total of N_{BW} subcarriers 525. Specific numerical values, such as N_{symb} and N_{BW}, may be variably applied according to a system.

A basic unit of a time-frequency resource area is a resource element (RE) 510, which may be represented by an OFDM symbol index or DFT-S-OFDM symbol index, and a subcarrier index. A resource block (RB) 515 may be defined as N_{RB} consecutive subcarriers 520 in the frequency domain. In general, a minimum transmission unit of data is an RB unit, and normally in an NR system, N_{symb} is equal to 14 and N_{RB} equals 12.

The structure of time-frequency resources as illustrated in FIG. 5 is applied to a Uu interface. In addition, the structure of time-frequency resources as illustrated in FIG. 5 may be also similarly applied to a sidelink.

According to an embodiment of the disclosure, an operation procedure of a terminal (also referred to as a remote UE or a source UE), a sidelink relay (also referred to as a relay or a relay UE), and another terminal (also referred to as a remote UE or a destination UE) for processing a PC5 unicast connection establishment procedure between the terminal and the other terminal for supporting data transmission and reception through a direct connection between the terminal and the other terminal will be described. In addition, according to an embodiment of the disclosure, a relay function configuration procedure of a sidelink relay for relaying data and signaling between a terminal and another terminal will be described. In addition, according to an embodiment of the disclosure, a procedure of processing a discovery message transmitted and received to discover a sidelink relay for supporting data transmission and reception through a direct connection between a terminal and another terminal will be described.

According to an embodiment of the disclosure, a sidelink relay may be authenticated to be used in at least one or a combination of a particular service, a particular terminal, a particular sidelink flow, a particular sidelink bearer, a particular unicast link, a particular source identifier, and a particular destination (target) identifier.

According to an embodiment of the disclosure, a sidelink relay may establish a direct connection with a terminal having been authenticated at an installation time point. For example, while transmitting a relay discovery message, a sidelink relay may obtain a direct connection establishment request for the purpose of sidelink relaying from an authenticated terminal, and establish a sidelink direct connection with the authenticated terminal. In addition, a sidelink relay may obtain a relay discovery request message (discovery solicitation message) from an authenticated terminal and transmit a discovery message to the authenticated terminal to obtain a direct connection establishment request for the purpose of sidelink relaying from the authenticated terminal, and establish a sidelink direct connection with the authenticated terminal.

When a PC5 direct link establishment request message is received from an authenticated terminal, a sidelink relay may establish a sidelink direct connection with the authenticated terminal. A method of a PC5 direct connection establishment request (PC5 direct link establishment request) used by a sidelink relay and a terminal for relay connection may include at least one or a combination of a method of including "an indication of connection through a relay" in a general PC5 direct link establishment request message, separately defining "a PC5 direct link establishment message for the purpose of relaying", or configuring use of a general PC5 direct link establishment request message transmitted through a sidelink bearer (referred to as a sidelink radio bearer or SLRB) for the purpose of relaying. The disclosure is not limited to the example.

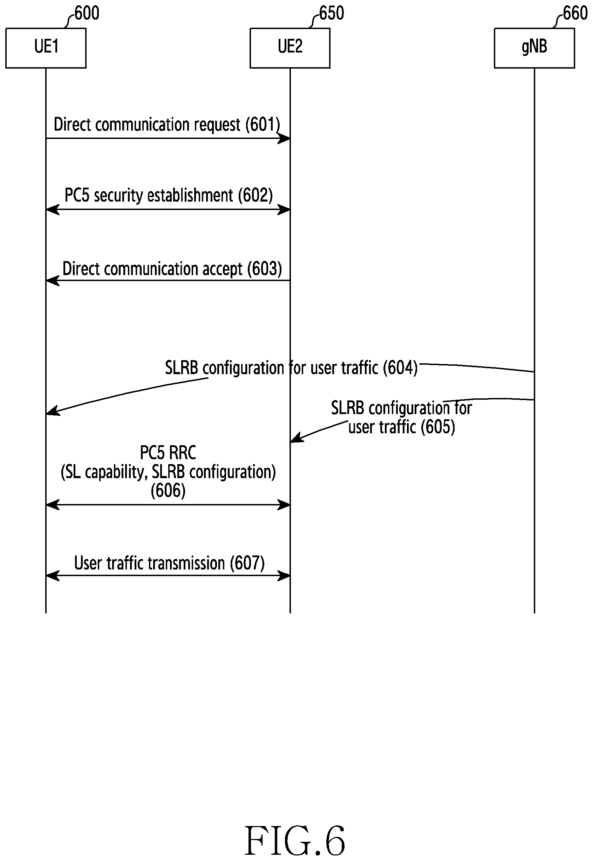

FIG. 6 is a diagram illustrating a procedure of processing configuration information for transmitting and receiving signaling and data in a wireless communication system performing direct communication between a UE and a UE.

Referring to FIG. 6, UE1 600 and UE2 650 are UEs capable of establishing a direct connection via a sidelink interface and transmitting and receiving data and signaling through the direct connection. UE1 600 may transmit a direct communication request message to establish a direct connection with UE2 650 in operation 601.

When the direct communication request message of operation 601 is received, UE2 650 may perform, in operation 602 with UE1 600, a PC5 security configuration procedure, such as sidelink authentication and encryption key configuration, for establishing a direct connection with UE1 600.

When it is determined that processing, such as sidelink authentication and encryption key configuration, for establishing a direct connection between UE1 600 and UE2 650 has been normally performed, UE2 650 may transmit a direct communication accept message to UE1 600 in operation 603.

UE1 600 and UE2 650 may perform a subsequent procedure for establishing a direct connection, and in RRC layers of UE1 600 and UE2 650, a signaling of exchanging sidelink UE capability information may be exchanged in operation 606. In operation 606, in the RRC layers of UE1 600 and UE2 650, a signaling of exchanging configuration information on a sidelink radio bearer (SLRB) for data transmission and reception may be exchanged.

A sidelink signaling radio bearer corresponding to a signaling transmitted and received between UE1 600 and UE2 650 in operation 601 to operation 606 corresponds to SL-SRB0, SL-SRB1, SL-SRB2, or SL-SRB3, and configuration information on SL-SRB0, SL-SRB1, SL-SRB2, and SL-SRB3 may be stored in UE1 600 and UE2 650 as a specified configuration.

A method of obtaining, by UE1 600 and UE2 650, configuration information on a sidelink data radio bearer (SL-DRB) corresponding to data in operation 606 may be noted through three examples as shown in [Table 1].

**[Table 1]**

| |
|---|
| (1) In a case where UE1 600 or UE2 650 is in a RRC_CONNECTED state where an RRC connection with a base station has been established, UE1 or UE2 may obtain configuration information on an SL-DRB from the base station through a dedicated RRC message (operation 604). UE1 600 or UE2 650 may provide, to the base station, information of a ProSe QoS indicator (PQI) or a QoS profile for a QoS flow of transmission data, and the base station may provide SLRB configuration information to UE1 600 or UE2 650 by referring to the PQI or the QoS profile for the QoS flow of the transmission data. |
| (2) In a case where UE1 600 or UE2 650 is in a RRC_IDLE state or RRC_INACTIVE state where an RRC connection with a base station has not been |
| established, UE1 or UE2 may obtain configuration information on an SL-DRB from the base station through an SIB message (operation 604). An SIB message configured and transmitted by the base station may include SLRB configuration information corresponding to a PQI or a QoS profile, and UE1 600 or UE2 650 may obtain SLRB configuration information corresponding to a ProSe QoS indicator (PQI) or a QoS profile for a QoS flow of transmission data from an SIB message. |
| (3) In a case where UE1 600 or UE2 650 is in an out-of-coverage state, UE1 or UE2 may obtain configuration information on an SL-DRB, which is preconfigured (pre-configuration). Pre-configuration information may be configured by SLRB configuration information corresponding to a ProSe QoS indicator (PQI) or a QoS profile, and UE1 600 or UE2 650 may obtain SLRB configuration information corresponding to a PQI or a QoS profile for a QoS flow of transmission data from pre-configuration information. |

If UE1 600 or UE2 650 is a transmission UE, UE1 600 or UE2 650 may obtain, by one of the three methods in [Table 1], configuration information on a sidelink data radio bearer for a QoS flow corresponding to data to be transmitted, and may transfer the SLRB configuration information on the QoS flow to UE2 650 or UE1 600 corresponding to a reception UE through RRC layer signaling in operation 606.

SLRB configuration information (limited to RX only SLRB configuration information) on a QoS flow of data, which the reception UE is to apply when performing reception, may be determined by the reception UE itself. UE1 600 or UE2 650 may apply SLRB configuration information on data configured in operation 606 to transmit and receive the data in operation 607.

In a case where a UE performs a connection with a base station through a three-layer sidelink relay (layer 3 U2N sidelink relay), a specified SLRB configuration may be applied to SL-SRB0, SL-SRB1, SL-SRB2, and SL-SRB3 used when a sidelink unicast connection is established between the UE and the sidelink relay.

In a case where a UE establishes a sidelink unicast connection between the UE and a sidelink relay when the UE connects to another UE through the sidelink relay, a specified SLRB configuration may be applied to a signaling radio bearer (SL-SRB0, SL-SRB1, SL-SRB2, and SL-SRB3) between the UE and the sidelink relay.

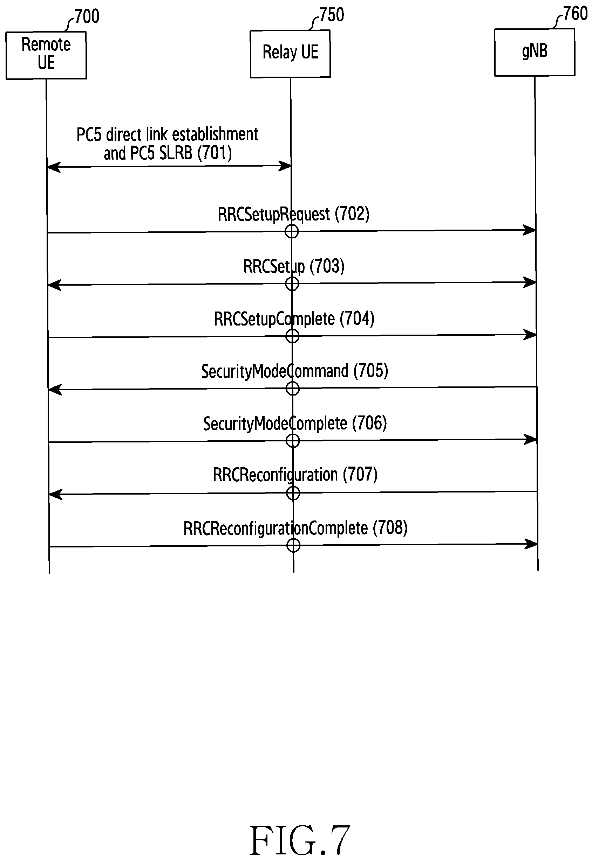

FIG. 7 is a diagram illustrating a procedure of processing configuration information for transmitting and receiving signaling and data in a wireless communication system in which a UE is connected to a base station through a sidelink relay.

Referring to FIG. 7, a UE 700 is unable to process an RRC connection establishment procedure with a base station 760 through a direction connection, and thus may transmit and receive RRC signaling required for RRC connection establishment by using sidelink signaling with a sidelink relay 750. In an embodiment of FIG. 7, the sidelink relay 750 may correspond to a two-layer sidelink relay (Layer-2 U2N sidelink relay). To this end, the UE 700 and the sidelink relay 750 may, in operation 701, establish a sidelink direct connection and configure a sidelink radio bearer (referred to as a PC5 SLRB) through which RRC signaling required for RRC connection establishment with the base station 760 is to be transmitted and received.

The UE 700 may apply a PC5 SLRB configuration when transmitting an RRCSetupRequest message in operation 702, and at this time, a specified SLRB configuration may be applied. The sidelink relay 760 may receive, from the UE 700, an RRCSetupRequest message through a specified SLRB configuration corresponding to the RRCSetupRequest message, and notify the base station 760 that the UE 700 is attempting RRC connection establishment through the sidelink relay 750.

The base station 760 may configure a dedicated RRC message including a Uu radio bearer and an SLRB configuration for the sidelink relay 750 to perform relay transmission of the RRCSetupRequest message of the UE 700 and subsequent messages (RRCSetup, RRCSetupComplete, SecurityModeCommand, SecurityModeComplete, RRCReconfiguration, and RRCReconfigurationComplete), and transmit the dedicated RRC message to the sidelink relay 750.

The base station 760 may configure a dedicated RRC message including an SLRB configuration for an RRCSetupComplete message of the UE 700 and subsequent RRC messages (SecurityModeComplete and RRCReconfigurationComplete), which the UE 700 may transmit to the base station 760 through the sidelink relay 750, and transmit the dedicated RRC message to the UE 700.

The base station 760 may configure an SLRB configuration for the UE 700 to transmit data of the UE through the sidelink relay 750 and transmit the SLRB configuration to the UE 700 through a dedicated RRC message, and may configure an SLRB configuration and a Uu radio bearer configuration for relay transmission of data of the UE 700 and transmit the configurations to the sidelink relay 750 through a dedicated RRC message.

The base station 760 may configure an SLRB configuration for transmitting, through the sidelink relay 750, data of the base station to be received by the UE 700 and transmit the SLRB configuration to the sidelink relay 750 and the UE 700 through a dedicated RRC message.

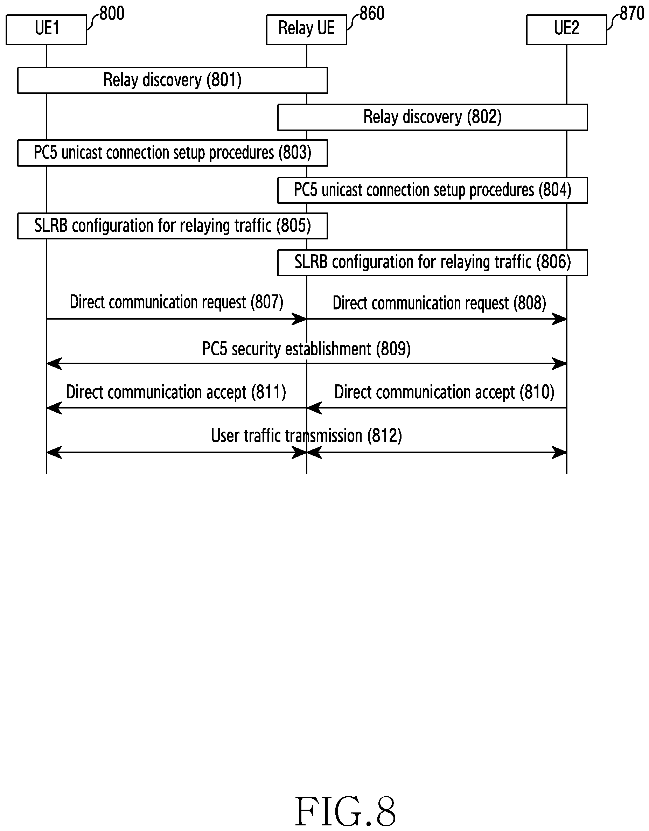

Next, referring to FIG. 8, a procedure of, when a UE and another UE establish a direct connection through a sidelink relay and transmit and receive signaling and data, establishing a sidelink unicast connection between the UE and the sidelink relay, establishing a sidelink unicast connection between the sidelink relay and the other UE, and establishing a sidelink unicast connection between the UE and the other UE through the sidelink relay will be described.

FIG. 8 is a diagram illustrating a procedure of processing configuration information for relay transmission of signaling and data in a wireless communication system in which a UE and another UE perform communication through a sidelink relay according to an embodiment of the disclosure.

Referring to FIG. 8, UE1 800 may determine whether to be able to establish a direct connection with UE2 870, and determine to discover a sidelink relay 860 capable of supporting a direct connection with UE2 870.

UE1 800 may perform a relay discovery procedure in operation 801. In operation 801, UE1 800 may use a procedure of transmitting a relay discovery solicitation message for discovering a sidelink relay capable of supporting a direct connection with UE2 870, and receiving a relay discovery message from a sidelink relay. Alternatively, in operation 801, UE1 800 may use a procedure of monitoring a relay discovery message from a sidelink relay capable of supporting a direct connection with UE2 870.

The sidelink relay 860 may use, in operation 802, a procedure of transmitting a relay discovery message for discovering UE2 870 with which UE1 800 is to establish a direct connection. Alternatively, in operation 802, the sidelink relay 860 may use a procedure of monitoring a relay discovery solicitation message transmitted by UE2 870 with which UE1 800 is to establish a direct connection, and transmitting a relay discovery message to UE2 870.

When it is determined that a direct connection with UE2 870 through the sidelink relay 860 is establishable, UE1 800 may perform a unicast connection procedure with the sidelink relay 860 in operation 803. When it is determined that a direct connection with UE1 800 through the sidelink relay 860 is establishable, UE2 870 may perform a unicast connection procedure with the sidelink relay 860 in operation 804.

A sidelink unicast connection between UE1 800 and the sidelink relay 860 and a sidelink unicast connection between the sidelink relay 860 and UE2 870 may be established by performing of operation 601 to operation 606 of FIG. 6. However, SLRB configuration for data transmission and reception, that is, configuration on an SL-DRB in operation 606 may omitted. A specified SLRB configuration may be applied to an SLRB (SL-SRB0, SL-SRB1, SL-SRB2, or SL-SRB3) for sidelink signaling transmitted and received in a unicast connection establishment procedure in operation 803 and operation 804.

UE1 800 and UE2 870 may establish an end-to-end unicast connection separately from unicast connections with the sidelink relay 860. An end-to-end unicast connection may be started from a procedure in which UE1 800 transmits a direct communication request message to UE2 870 through relay transmission of the sidelink relay 860 (operation 807 and operation 808).

UE1 800 and UE2 870 may perform a PC5 security procedure of processing sidelink authentication and encryption key configuration, through relay transmission of the sidelink relay 860 (operation 809).

When it is determined that a sidelink security procedure has been normally performed, UE2 870 may perform a procedure of transmitting a direct communication accept message to UE1 800 through relay transmission of the sidelink relay 860 (operation 810 and operation 811). Although not illustrated in FIG. 8, when exchange of sidelink UE capability information between UE1 800 and UE2 870 is required, a sidelink UE capability message of UE1 800 and UE2 870 may be transmitted and received through relay transmission of the sidelink relay 860. In addition, although not illustrated in FIG. 8, an RRC configuration message between UE1 800 and UE2 870 may be transmitted and received through relay transmission of the sidelink relay 860.

UE1 800 and UE2 870 may transmit their own data to a counterpart UE through relay transmission of the sidelink relay 860, and receive data of the counterpart UE through relay transmission of the sidelink relay 860 (operation 812). An end-to-end unicast connection may be also started from a procedure in which UE2 870 first transmits a direct communication request message to UE 1800 through relay transmission of the sidelink relay 860.

UE1 800, UE2 870, and the sidelink relay 860 are required to obtain an end-to-end unicast connection establishment message transmitted and received between the two LTEs and sidelink radio bearer configuration information corresponding to data of the two UEs through relay transmission of the sidelink relay 860. The sidelink radio bearer configuration information may correspond to, for example, SLRB configuration information applied for UE1 800 to transmit a direct communication request message of operation 807 to the sidelink relay 860 and for the sidelink relay 860 to receive a direct communication request message from UE1 800. In addition, the sidelink radio bearer configuration information may correspond to SLRB configuration information applied for UE2 870 to transmit a direct communication accept message of operation 810 to the sidelink relay 869 and for the sidelink relay 860 to receive a direct communication accept message from UE2 870. In addition, the sidelink radio bearer configuration information may correspond to SLRB configuration information applied for UE1 800 to transmit and receive data of UE1 between UE1 800 and the sidelink relay 860 when UE1 800 transmits the data of LTE1 to UE2 870 in operation 812.

The UE1 800 and the sidelink relay 860 may obtain SLRB configuration information for the purpose of relaying in operation 805. The UE2 870 and the sidelink relay 860 may obtain SLRB configuration information for the purpose of relaying in operation 806. Time points at which operation 805 and operation 806 illustrated in FIG. 8 are performed may be an embodiment. That is, the operations may be performed after the times illustrated in FIG. 8 (e.g., after operation 811) according to a method of obtaining an SLRB configuration for the purpose of relaying, or a U2U relay type (layer 3 relay or layer 2 relay).

A method of obtaining SLRB configuration information for the purpose of relaying according to a layer2 U2U relay type is as shown in [Table 2] below.

**[Table 2]**

| (Option 1) |
|---|
| -Specified sidelink RLC bearer configuration for Remote UE's SL-SRB0 |
| -For other SL-SRBs (e.g., SL-SRB1, SL-SRB2 or SL-SRB3) for Remote UE, dedicated sidelink RLC bearer configuration via PC5 RRC between Relay UE and Remote UE |
| -For SL-DRBs for Remote UE, dedicated sidelink RLC bearer configuration via PC5 RRC between Relay UE and Remote UE |

| (Option 2) |
|---|
| -Specified sidelink RLC bearer configuration for Remote UE's SL-SRB0/SL-SRB1/SL-SRB2/SL-SRB3 (the specified RLC bearer configuration can be configured based on RLC mode for the associated SL-SRB. So one or more specified RLC bearer configurations can be defined.) |
| -For SL-DRBs for Remote UE, dedicated sidelink RLC bearer configuration via PC5 RRC between Relay UE and Remote UE |

| (Option 3) |
|---|
| -For SL-SRBs and SL-DRBs for Remote UE, dedicated sidelink RLC bearer configuration via PC5 RRC between Relay UE and Remote UE |
| In a case of a dedicated sidelink RLC bearer configuration in option 1, option 2, and option 3, a relay UE or a transmission UE may obtain an SLRB configuration through a dedicated RRC message transmitted by a base station, an SIB message transmitted by a base station, or preconfiguration configuration information. |
| The relay UE may transfer a dedicated sidelink RLC bearer configuration to the transmission UE and/or a reception UE. The transmission UE may transfer a dedicated sidelink RLC bearer configuration to the reception UE and/or the relay UE. |
| SLRB configuration information on SL-SRBx to which a specified configuration is not applied with respect to SL-SRB0, SL-SRB1, SL-SRB2, and SL-SRB3 may be obtained by transmitting a SidelinkUEInformationNR message to the base station, may be obtained from an SIB message of the base station, or may be obtained from a preconfiguration, and an SL-SRB indicator for indicating that information is SLRB configuration information on SL-SRBx or QoS information corresponding to an SL-SRB may be defined. |
| In a case of an SL-DRB, an SLRB configuration may be configured based on a corresponding PQI and/or QoS profile information. |

[Table 3] shows an example of a case of configuring, as a dedicated SLRB configuration, SLRB configuration information for the purpose of relay transmission.

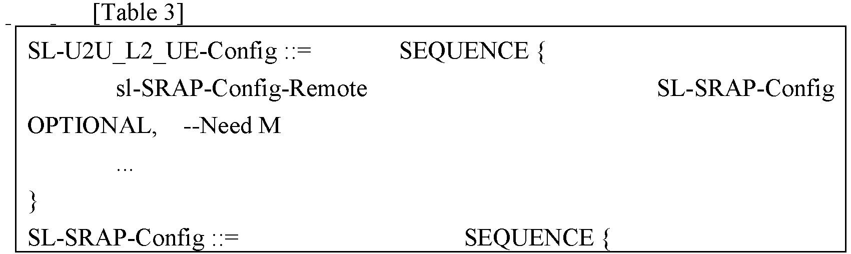

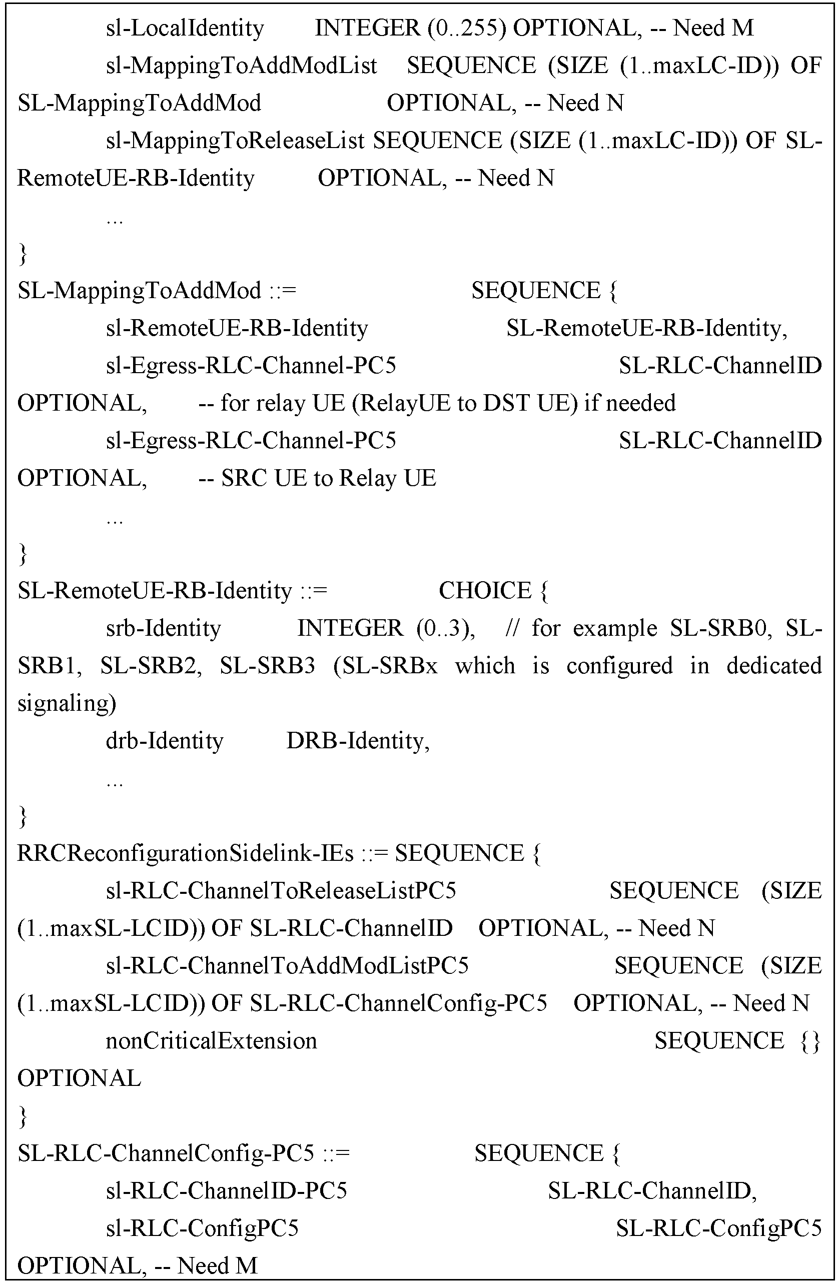

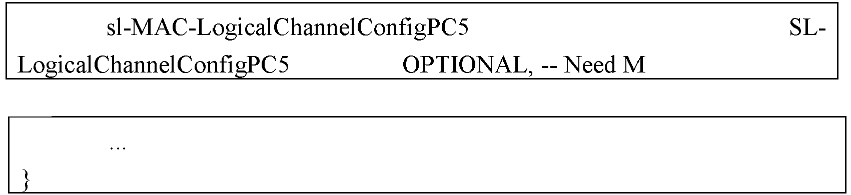

[Table 4] shows an example of a case of configuring, as a specified configuration, SLRB configuration information for the purpose of relay transmission.

**[Table 4]**

| |
|---|
| (Option 1) SLRB configuration information on SL-SRBx to which an unacknowledged (UM) RLC mode is to be applied and SLRB configuration information on SL-SRBx to which an acknowledged (AM) RLC mode is to be applied may be specified, and which SL-SRBx is to use which RLC mode may be specified. |
| -A specified PC5 Relay RLC channel for Remote UE's SL-SRB with UM RLC |
| -A specified PC5 Relay RLC channel for Remote UE's SL-SRB with AM RLC (Option 2) An SLRB configuration is configured to apply an AM RLC mode to all SL-SRBx to which a specified configuration is to be applied |
| -A specified PC5 Relay RLC channel (e.g., AM RLC) for Remote UE's SL-SRBs (Option 3) An SLRB configuration is configured to apply a UM RLC mode to all SL-SRBx to which a specified configuration is to be applied |
| -A specified PC5 Relay RLC channel (e.g., UM RLC) for Remote UE's SL-SRBs |

A method of obtaining SLRB configuration information for the purpose of relaying according to a layer3 U2U relay type is as shown in [Table 5] below.

**[Table 5]**

| (Option 1) |
|---|
| -Specified sidelink bearer configuration for Remote UE's SL-SRB0 |
| -For other SL-SRBs for Remote UE, dedicated sidelink bearer configuration via PC5 RRC between Relay UE and Remote UE |
| -For SL-DRBs for Remote UE, dedicated sidelink bearer configuration via PC5 RRC between Relay UE and Remote UE |

| (Option 2) |
|---|
| -Specified sidelink bearer configuration for Remote UE's SL-SRB0/SL-SRB1/SL-SRB2/SL-SRB3 (the specified sidelink bearer configuration can be configured based on RLC mode for the associated SL-SRB. So one or more specified sidelink bearer configuration can be defined.) |
| -For SL-DRBs for Remote UE, dedicated sidelink bearer configuration via PC5 RRC between Relay UE and Remote UE |

| (Option 3) |
|---|
| -For SL-SRBs and SL-DRBs for Remote UE, dedicated sidelink bearer configuration via PC5 RRC between Relay UE and Remote UE |
| In a case of a dedicated sidelink bearer configuration in option 1, option 2, and option 3, a relay UE or a transmission UE may obtain an SLRB configuration through a dedicated RRC message transmitted by a base station, an SIB message transmitted by a base station, or preconfiguration setup information. The relay UE may transfer a dedicated sidelink bearer configuration to the transmission UE and/or a reception UE. The transmission UE may transfer a dedicated sidelink bearer configuration to the reception UE and/or the relay UE. |
| In a case where a configuration for SL-SRB0, SL-SRB 1, SL-SRB2, and SL-SRB3 is not a specified configuration, SLRB configuration information on SL-SRBx may be obtained by transmitting a SidelinkUEInformationNR message to the base station, may be obtained from an SIB message of the base station, or may be obtained from a preconfiguration, and an SL-SRB indicator for indicating that information is SLRB configuration information on SL-SRBx or QoS information corresponding to an SL-SRB may be defined. |
| In a case of an SL-DRB, an SLRB configuration may be configured based on a corresponding PQI and/or QoS profile information. |

[Table 6] shows an example of a case of configuring, as a dedicated SLRB configuration, SLRB configuration information for the purpose of relay transmission.

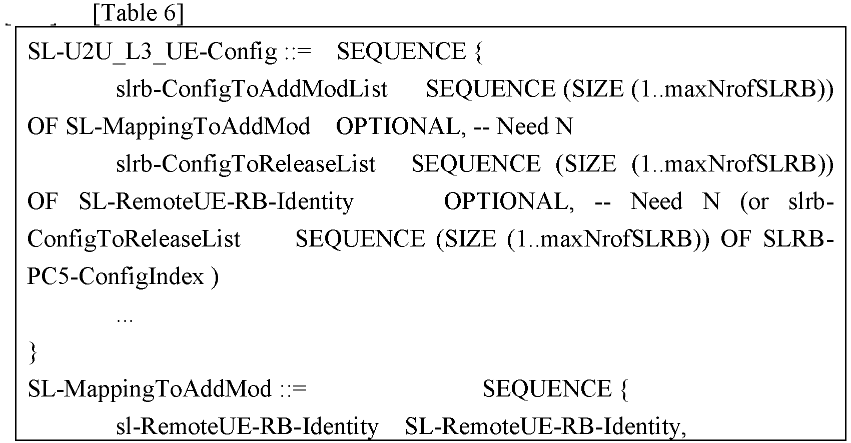

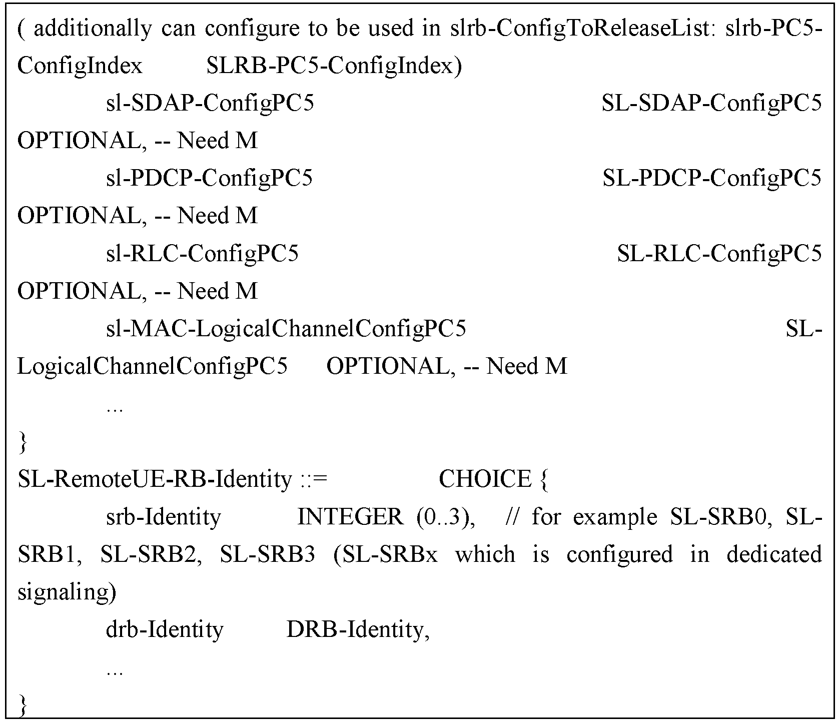

[Table 7] shows an example of a case of configuring, as a specified configuration, SLRB configuration information for the purpose of relay transmission.

**[Table 7]**

| |
|---|
| (Option 1) SLRB configuration information on SL-SRBx to which an unacknowledged (UM) RLC mode is to be applied and SLRB configuration information on SL-SRBx to which an acknowledged (AM) RLC mode is to be applied may be specified, and which SL-SRBx is to use which RLC mode may be specified. |
| -A specified PC5 Relay SL-SRB for Remote UE's SL-SRB with UM RLC |
| -A specified PC5 Relay SL-SRB for Remote UE's SL-SRB with AM RLC (Option 2) An SLRB configuration is configured to apply an AM RLC mode to all SL-SRBx to which a specified configuration is to be applied |
| -A specified PC5 Relay SL-SRB configuration with AM RLC mode for Remote UE's any SL-SRBs |
| (Option 3) An SLRB configuration is configured to apply a UM RLC mode to all SL-SRBx to which a specified configuration is to be applied |
| -A specified PC5 Relay SL-SRB configuration for UM RLC mode for Remote UE's any SL-SRBs |

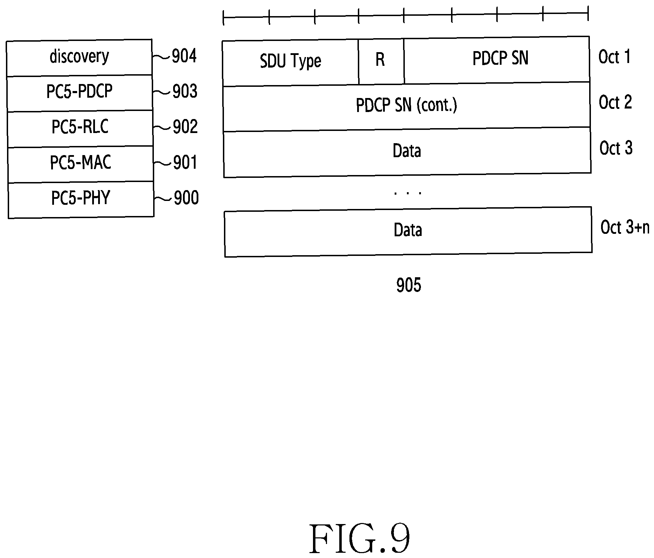

Next, referring to FIG. 9, a sidelink relay discovery message transmitted in operation 801 and operation 802 of FIG. 8 will be described.

FIG. 9 is a diagram illustrating processing of a discovery message for discovering a sidelink relay in a wireless communication system in which a UE and another UE perform communication through the sidelink relay according to an embodiment of the disclosure.

A sidelink discovery message used in a U2U relay (layer 3 U2U relay or layer 2 U2U relay) may have a protocol stack configured by layers 900 to 904 in FIG. 9. A sidelink discovery message may be configured in the discovery layer 904.

A PDCP data PDU format for a sidelink discovery message used in a U2U relay may be configured as a format 905. A logical channel identifier through which a sidelink discovery message used in a U2U relay is transmitted may be configured to be 0 identical to a logical channel identifier through which a U2N relay discovery message or a D2D direct discovery message is transmitted. The disclosure is not limited to the above example, and a logical channel identifier through which a sidelink discovery message used in a U2U relay is transmitted may be configured to have a value different from that of a logical channel identifier through which a U2N relay discovery message or a D2D direct discovery message is transmitted.

A method of configuring a SDU type of a sidelink discovery message used in a U2U relay in the format 905, and a method for a logical channel identifier of a sidelink discovery message used in a U2U relay are as shown in [Table 8].

**[Table 8]**

| (Option 1) |
|---|
| -Unlike U2N relay discovery or D2D discovery, in order to distinguish U2U relay discovery, a PDCP SDU type corresponding to U2U relay discovery may be specified. |
| -A logical channel identifier different from that of U2N relay discovery or D2D direct discovery may be configured for the purpose of U2U relay discovery. |

| (Option 2) |
|---|
| -Unlike U2N relay discovery or D2D direct discovery, in order to distinguish U2U relay discovery, a PDCP SDU type corresponding to U2U relay discovery may be specified. |
| -Logical channel identifier 0 identical to that of U2N relay discovery or D2D direct discovery may be configured for the purpose of U2U relay discovery. |

| (Option 3) |
|---|
| -Like U2N relay discovery or D2D discovery, a PDCP SDU type of a PDCP data PDU for U2U relay discovery may not be used. |
| -A logical channel identifier different from that of U2N relay discovery or D2D direct discovery may be configured for the purpose of U2U relay discovery. |

| (Option 4) |
|---|
| -Like U2N relay discovery or D2D discovery, a PDCP SDU type of a PDCP data PDU for U2U relay discovery may not be used. |
| -Logical channel identifier 0 identical to that of U2N relay discovery or D2D direct discovery may be configured for the purpose of U2U relay discovery. |
| A sidelink SLRB (signaling radio bearer) for a U2N relay discovery message or D2D direct discovery message is specified to be SL-SRB4. A sidelink SLRB (signaling radio bearer) for a U2U relay discovery message may be specified to be the same SL-SRB4 as described above. In addition, a sidelink SLRB (signaling radio bearer) for a U2U relay discovery message may be specified to be a different SL-SRB. |

Both mode 1 in which a base station schedules a transmission resource and mode 2 in which a transmission UE directly selects a transmission resource may be applied as a transmission resource allocation mode applied to a UE (source UE or destination UE) and a sidelink relay in a wireless communication system using a U2U relay. The UE (source UE or destination UE) and the sidelink relay may perform an operation of measuring and reporting a congestion busy ratio (CBR) for a transmission resource pool according to a configuration of the base station, and the transmission resource pool in which CBR measurement and reporting is configured may correspond to a sidelink discovery-dedicated resource pool (including a U2U discovery-dedicated resource pool) or a general sidelink resource pool.

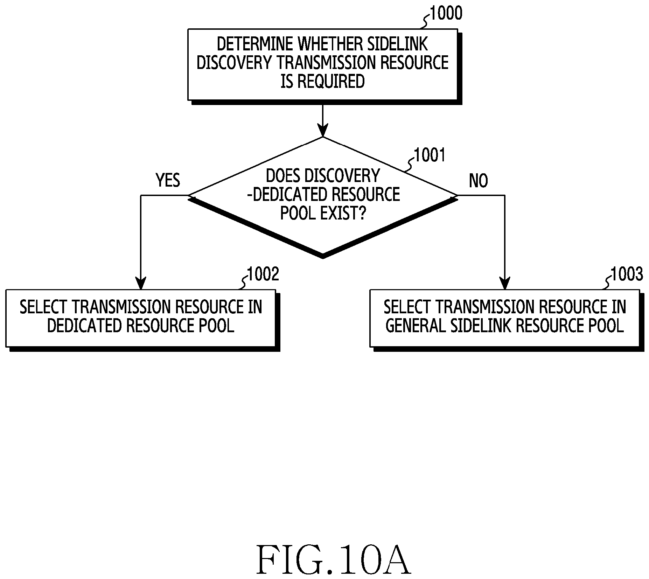

A method of selecting a transmission resource pool and a transmission resource in mode 2 in which a transmission UE directly selects a transmission resource in a wireless communication system using a U2U relay will be described next with reference to FIG. 10A to FIG. 10C. FIG. 10A to FIG. 10C are embodiments of a method of configuring a transmission resource pool and selecting a transmission resource for a U2U relay discovery message.

FIG. 10A may correspond to a case where a separate transmission resource pool is configurable for transmission of a sidelink discovery message, that is, transmission of a U2U relay discovery message, a U2N relay discovery message, and a D2D direct discovery message. If a separate transmission resource pool for the purpose of sidelink discovery message transmission is not configured, a transmission resource pool for the purpose of general sidelink transmission may be configured. Therefore, regardless of any sidelink discovery message transmission, a transmission resource pool for the purpose of general sidelink transmission may be used to transmit a sidelink discovery message.

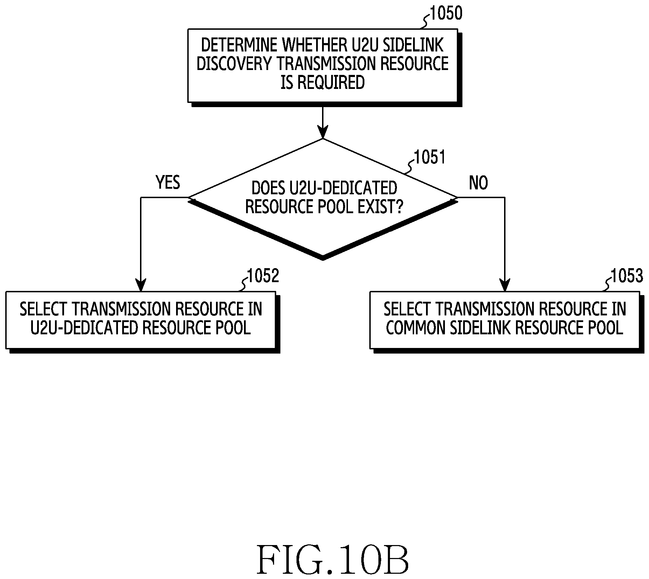

FIG. 10B may correspond to a case where a separate transmission resource pool is configurable for transmission of a U2U relay discovery message. If a separate transmission resource pool for U2U relay discovery message transmission is not configured, a transmission resource pool for the purpose of general sidelink transmission is configured. Therefore, a transmission resource pool for the purpose of general sidelink transmission may be used to transmit a U2U relay discovery message.

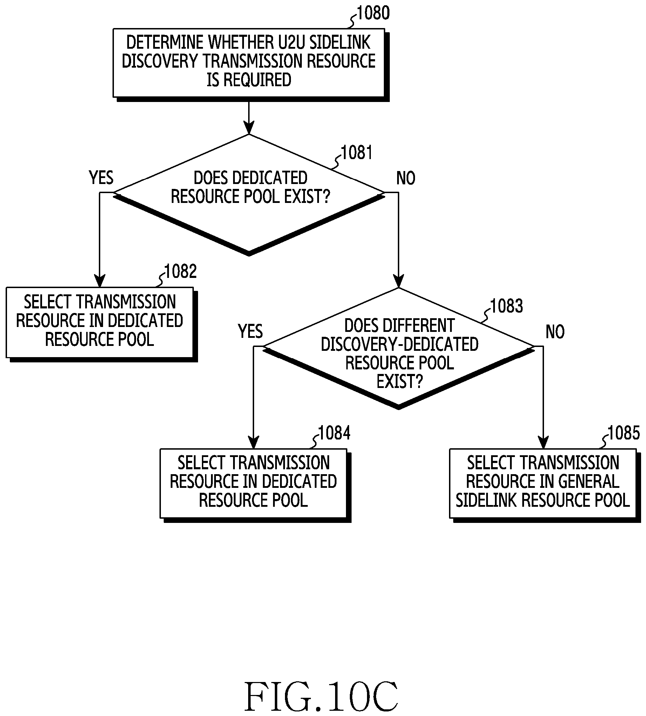

In FIG. 10C, if a separate transmission resource pool for U2U relay discovery message transmission is not configured, and a separate transmission resource pool for transmission of a U2N relay discovery message or D2D direct discovery message is configured, a resource pool configured for transmission of a different discovery message may be used to transmit a U2U relay discovery message.

If a power saving option is configured for a transmission resource pool (partial sensing, full sensing, continuous partial sensing, non-continuous partial sensing, random selection, etc.) in FIG. 10A to FIG. 10C, when a UE selects a transmission resource pool or a transmission resource for U2U relay discovery message transmission, the UE may apply a power saving option configured for the transmission resource pool.

FIG. 10A is a diagram illustrating an operation of processing a sidelink relay discovery message transmission resource in a wireless communication system in which a UE and another UE perform communication through a sidelink relay according to an embodiment of the disclosure.

Referring to FIG. 10A, a UE may, in operation 1000, determine whether a U2U relay discovery message to be transmitted occurs and a U2U sidelink discovery transmission resource is required. The UE may, in operation 1001, determine whether a transmission resource pool for the purpose of sidelink discovery has been configured. When the UE determines, according to the determination in operation 1001, that a transmission resource pool for the purpose of sidelink discovery has been configured, the UE may, in operation 1002, determine to select a transmission resource in the transmission resource pool for the purpose of sidelink discovery. When it is determined according to the determination in operation 1001 that a transmission resource pool for the purpose of sidelink discovery has not been configured, the UE may, in operation 1003, determine to select a transmission resource in a general sidelink transmission resource pool.

FIG. 10B is a diagram illustrating an operation of processing a sidelink relay discovery message transmission resource in a wireless communication system in which a UE and another UE perform communication through a sidelink relay according to an embodiment of the disclosure.

Referring to FIG. 10B, a UE may, in operation 1050, determine whether a U2U relay discovery message to be transmitted occurs and a U2U sidelink discovery transmission resource is required. The UE may, in operation 1051, determine whether a transmission resource pool for the purpose of U2U sidelink discovery has been configured. When it is determined according to the determination in operation 1051 that a transmission resource pool for the purpose of U2U sidelink discovery has been configured, the UE may, in operation 1052, determine to select a transmission resource in the transmission resource pool for the purpose of U2U sidelink discovery. When it is determined according to the determination in operation 1051 that a transmission resource pool for the purpose of U2U sidelink discovery has not been configured, the UE may, in operation 1053, determine to select a transmission resource in a general sidelink transmission resource pool.

FIG. 10C is a diagram illustrating an operation of processing a sidelink relay discovery message transmission resource in a wireless communication system in which a UE and another UE perform communication through a sidelink relay according to an embodiment of the disclosure.

Referring to FIG. 10C, a UE may, in operation 1080, determine whether a U2U relay discovery message to be transmitted occurs and a U2U sidelink discovery transmission resource is required. The UE may, in operation 1081, determine whether a transmission resource pool for the purpose of U2U sidelink discovery has been configured. When it is determined according to the determination in operation 1081 that a transmission resource pool for the purpose of U2U sidelink discovery has been configured, the UE may, in operation 1082, determine to select a transmission resource in the transmission resource pool for the purpose of U2U sidelink discovery. When it is determined according to the determination in operation 1081 that a transmission resource pool for the purpose of U2U sidelink discovery has not been configured, the UE may, in operation 1083, determine whether a dedicated resource pool for a different purpose of discovery has been configured. When the UE determines, according to the determination in operation 1083, that a dedicated resource pool for a different purpose of discovery has been configured, the UE may, in operation 1084, determine to select a transmission resource in a transmission resource pool for a different purpose of sidelink discovery. When it is determined according to the determination in operation 1083 that a transmission resource pool for a different purpose of sidelink discovery has not been configured, the UE may, in operation 1085, determine to select a transmission resource in a general sidelink transmission resource pool.

A transmission UE may, when a sidelink transmission resource is obtained, configure one or more logical channels corresponding the same destination identifier (destination layer-2 ID) to be the same MAC PDU and transmit the MAC PDU by using the obtained transmission resource. If the UE is able to support both U2N relay discovery and U2U relay discovery, different destination identifier values may be configured for a U2N relay discovery message and a U2U relay discovery message. In addition, if the UE is able to support both U2N relay discovery and U2U relay discovery, the same destination identifier value may be configured for a U2N relay discovery message and a U2U relay discovery message.

In a case where a transmission UE is able to support both U2U relay discovery message transmission and U2N relay discovery message transmission, and the same destination identifier is configured to be used in a U2U relay discovery message and a U2N relay discovery message, when a U2N relay discovery message and a U2U relay discovery message to be transmitted to the transmission UE occur concurrently (the two message are present in an MAC buffer of the UE while a MAC PDU is being configured, but not at exactly the same time point), the destination identifiers are same and thus the transmission UE may configure and transmit a MAC PDU so that the U2N relay discovery message and the U2U relay discovery message are included in the same MAC PDU. In a case where a dedicated resource pool for the purpose of U2U relay discovery message transmission is configured, even if destination identifiers configured for a U2U relay discovery message and a U2N relay discovery message are same, respective resources on which transmission of the U2U relay discovery message and the U2N relay discovery message is possible are different from each other. Therefore, a MAC PDU including the U2U relay discovery message and a MAC PDU including the U2N relay discovery message may be separately configured.

In a case where a dedicated resource pool for the purpose of sidelink discovery message transmission is configured, a selected resource for the purpose of sidelink discovery message transmission may be used to transmit a U2U relay discovery message and a U2N relay discovery message. Therefore, if destination identifiers configured for a U2U relay discovery message and a U2N relay discovery message are same, a MAC PDU may be configured so that the U2U relay discovery message and the U2N relay discovery message are included in one MAC PDU. In a case where a resource for the purpose of general sidelink transmission is configured to be used to transmit a U2U relay discovery message and a U2N relay discovery message, a selected transmission resource may be used to transmit a U2U relay discovery message and a U2N relay discovery message. Therefore, if destination identifiers configured for a U2U relay discovery message and a U2N relay discovery message are same, the U2U relay discovery message and the U2N relay discovery message may be configured to be included in one MAC PDU.

A logical channel identifier for a U2U relay discovery message may be configured to have a value identical to or different from a logical channel identifier for a U2N relay discovery message as described in the example of [Table 8].

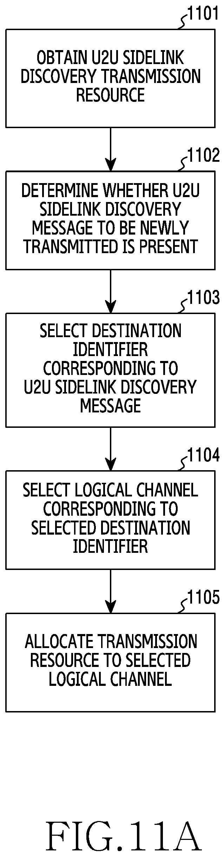

Next, a procedure, such as logical channel prioritization in which a MAC PDU for transmission of a U2U relay discovery message is configured based on information relating to whether destination identifiers configured for the U2U relay discovery message and a U2N relay discovery message are same, and configuration of a transmission resource pool in which transmission of a sidelink discovery message is possible, will be described with reference to FIG. 11A to FIG. 11E.

FIG. 11A is a diagram illustrating an operation of processing transmission of a sidelink relay discovery message in a wireless communication system in which a UE and another UE perform communication through a sidelink relay according to an embodiment of the disclosure.

FIG. 11A assumes a case where a dedicated resource pool is configured for a U2U relay discovery message. That is, FIG. 11A illustrates a case where a U2U sidelink discovery-dedicated resource pool in which transmission of a U2U relay discovery message is possible is configured.

Referring to FIG. 11A, a UE may, in operation 1101, determine that a U2U sidelink discovery-dedicated resource pool in which transmission of a U2U relay discovery message is possible has been configured, and determine that a resource has been obtained from the U2U sidelink discovery resource pool for the purpose of U2U relay discovery message transmission. The UE may, in operation 1102, determine that a U2U sidelink discovery message (e.g., U2U relay discovery message) to be newly transmitted is present in a buffer. The UE may, in operation 1103, select a destination identifier of the U2U sidelink discovery message (e.g., U2U relay discovery message). The UE may select the destination identifier according to a procedure of [Table 9] below.

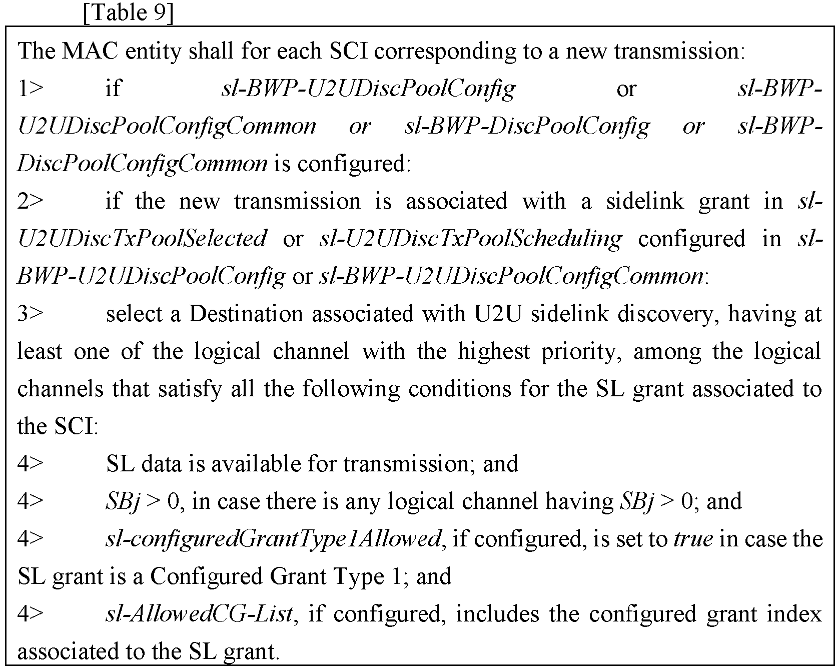

The UE may, in operation 1104, select a logical channel corresponding to the destination identifier selected in operation 1103. The UE may select the logical channel according to a procedure of [Table 10] below.

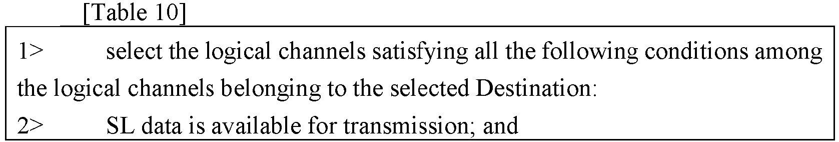

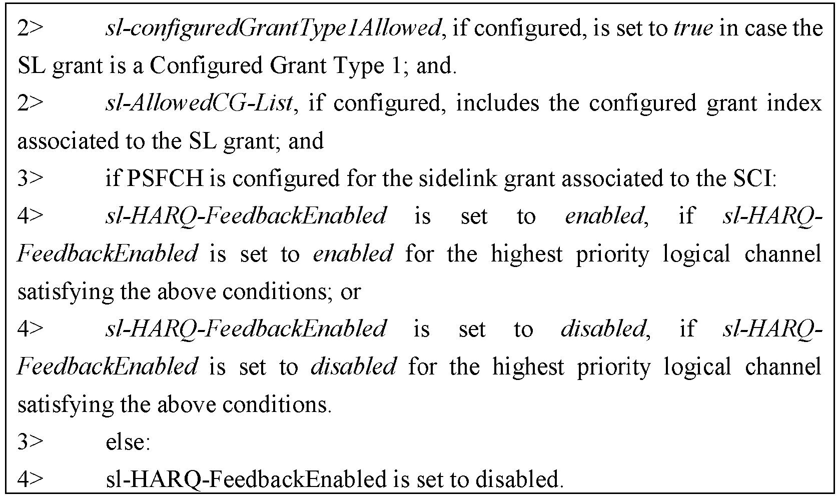

In operation 1105, the UE may perform, as shown in [Table 11] below, an operation of allocating the transmission resource obtained in operation 1101 to the logical channel selected in operation 1104.

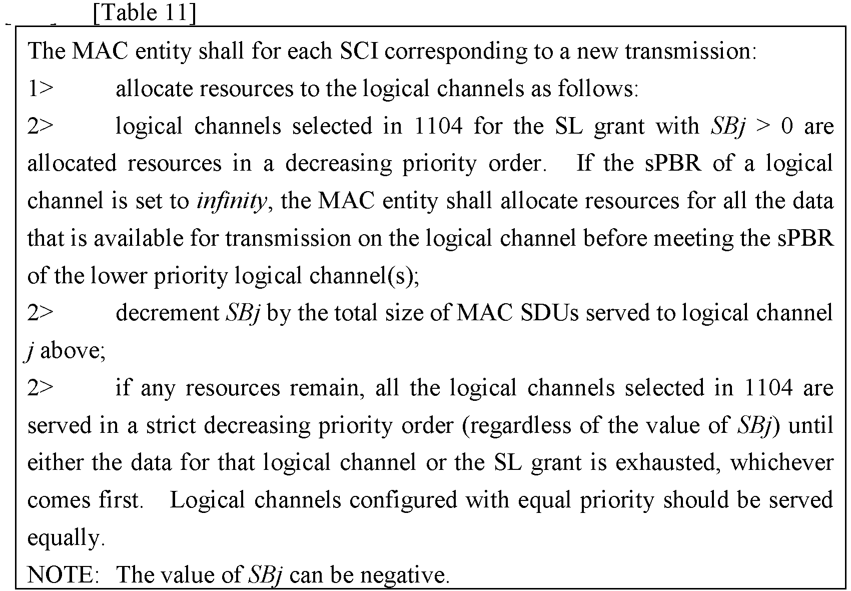

An operation of selecting a destination identifier in a logical channel prioritization procedure performable by a transmission UE for a U2N relay discovery message, a D2D direct discovery message, or a general sidelink message in an embodiment of FIG. 11A is as shown in [Table 12] below. An operation of selecting a logical channel identifier for the selected destination identifier may be the same as the procedure of operation 1104.

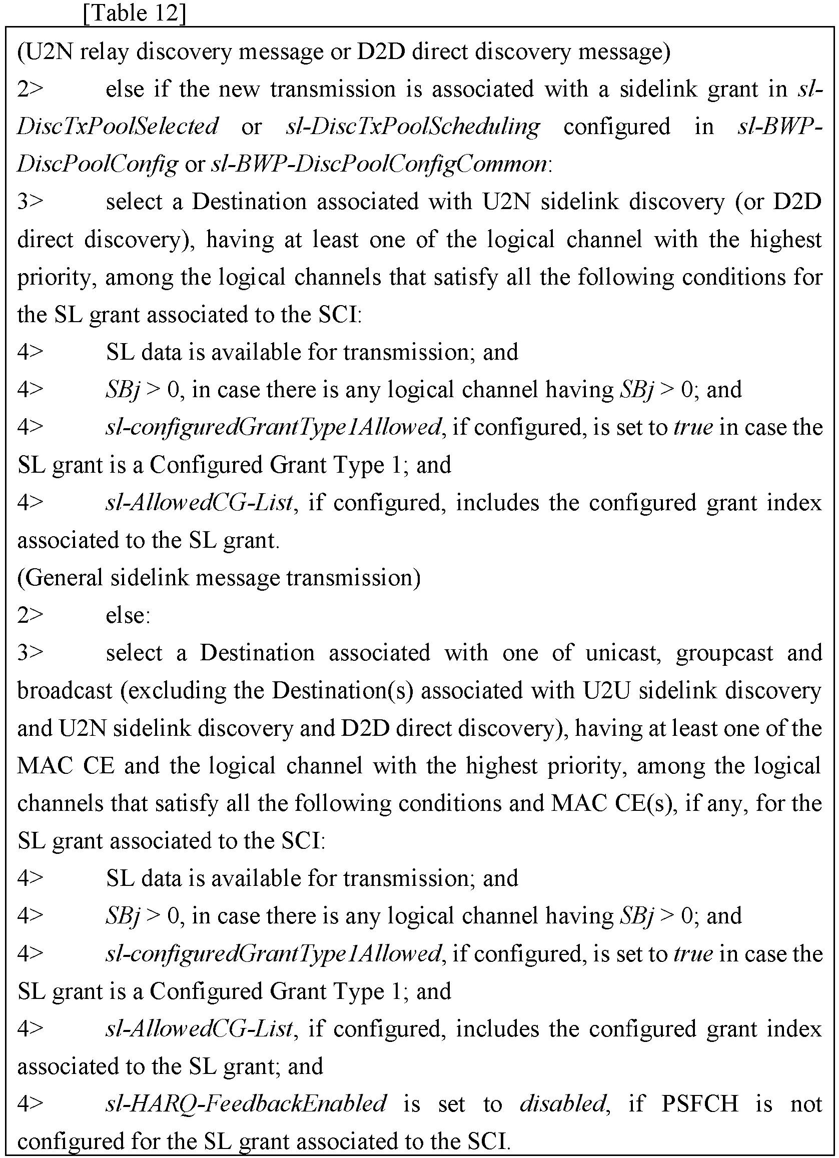

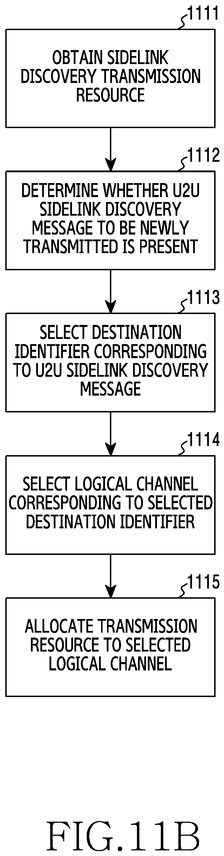

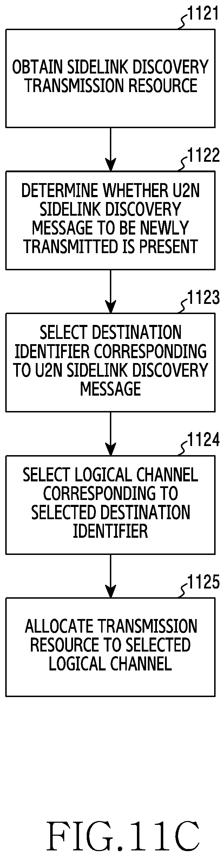

FIG. 11B and FIG. 11C assume a case where a dedicated resource pool is configured for the purpose of sidelink discovery message transmission. If a dedicated resource pool for the purpose of sidelink discovery message transmission has been configured, a transmission UE may transmit a U2U relay discovery message or U2N relay discovery message by using a transmission resource allocated from the resource pool for the purpose of sidelink discovery message transmission.

In a case where a UE is able to support a U2U relay discovery message and a U2N relay discovery message and the same destination identifier is assigned to a U2U relay discovery message and a U2N relay discovery message, the UE may configure and transmit a MAC PDU including both a U2U relay discovery message and a U2N relay discovery message on a transmission resource allocated for U2U relay discovery message transmission, and the UE may configure and transmit a MAC PDU including both a U2N relay discovery message and a U2U relay discovery message on a transmission resource allocated for U2N relay discovery message transmission.

FIG. 11B is a diagram illustrating an operation of processing transmission of a sidelink relay discovery message in a wireless communication system in which a UE and another UE perform communication through a sidelink relay according to an embodiment of the disclosure.

Referring to FIG. 11B, a UE may, in operation 1111, determine that a sidelink discovery transmission resource pool has been configured and determine that a resource has been obtained from the resource pool for the purpose of sidelink discovery transmission. The UE may, in operation 1112, determine that a U2U relay discovery message to be newly transmitted is present in a buffer. The UE may, in operation 1113, select a destination identifier of the U2U relay discovery message. The UE may select the destination identifier according to a procedure of [Table 13] below.

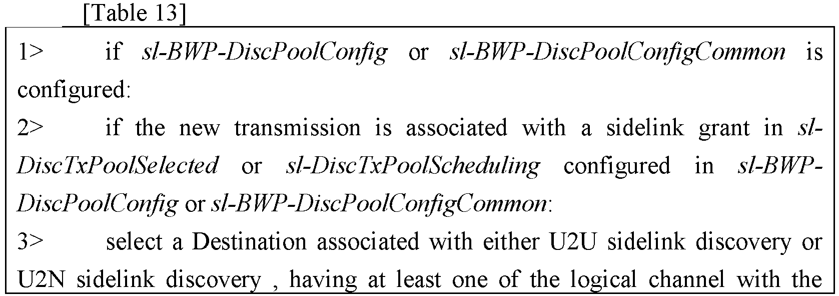

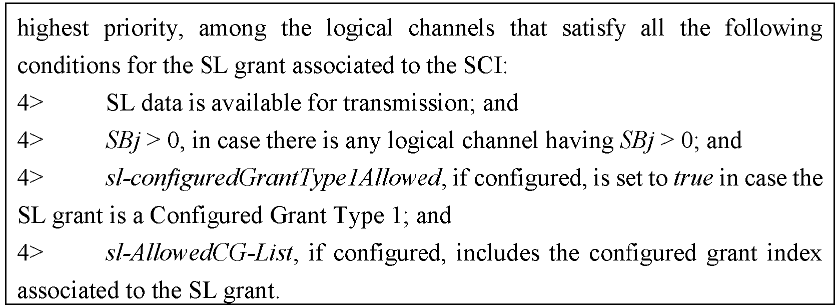

The UE may, in operation 1114, select a logical channel corresponding to the destination identifier selected in operation 1113. The UE may select the logical channel according to a procedure of [Table 14] below.

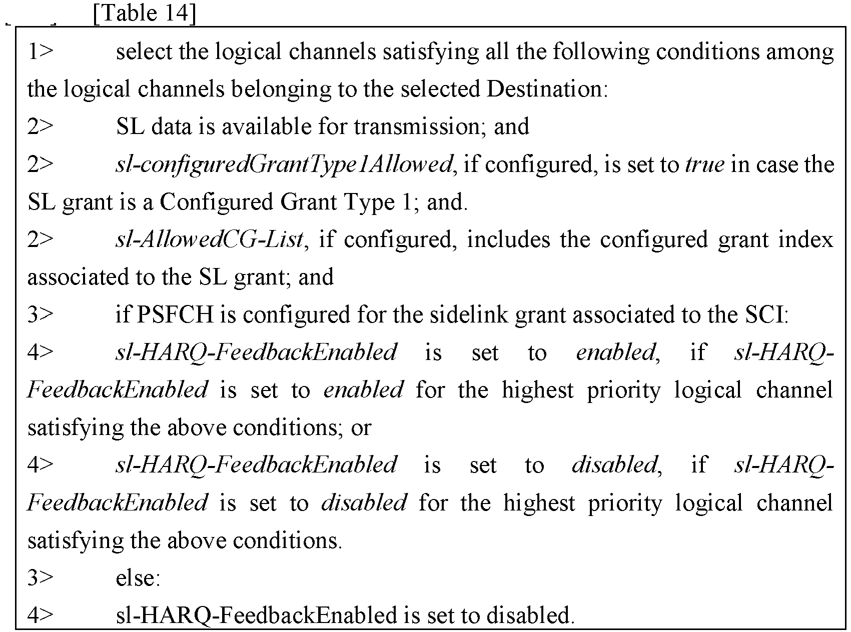

In operation 1115, the UE may perform, as shown in [Table 15] below, an operation of allocating the transmission resource obtained in operation 1111 to the logical channel selected in operation 1114.

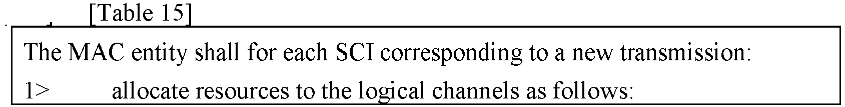

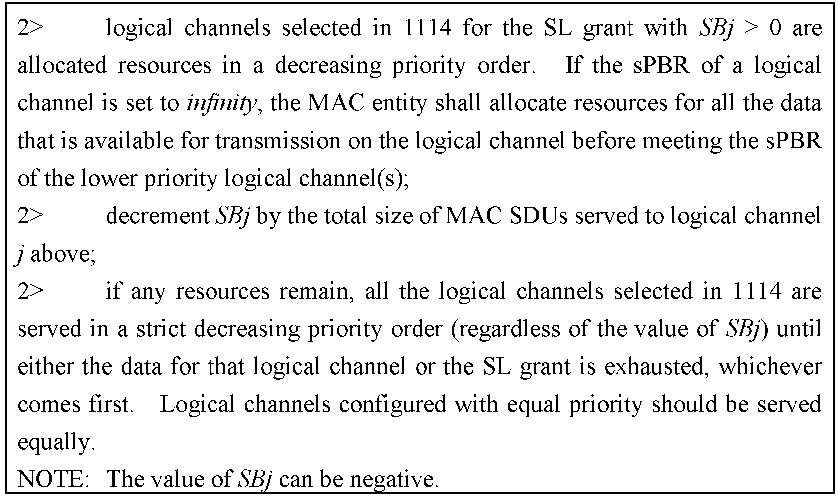

When it is determined that the obtained transmission resource is still available and a U2N relay discovery message having the same destination identifier as the U2U relay discovery message is present in the MAC buffer of the UE, the UE may allocate a logical channel corresponding to the U2N relay discovery message to the obtained transmission resource, configure the messages to be the same MAC PDU, and transmit the MAC PDU.

FIG. 11C is a diagram illustrating an operation of processing transmission of a sidelink relay discovery message in a wireless communication system in which a UE and another UE perform communication through a sidelink relay according to an embodiment of the disclosure.

Referring to FIG. 11C, a UE may, in operation 1121, determine that a sidelink discovery transmission resource pool has been configured and determine that a resource has been obtained from the resource pool for the purpose of sidelink discovery transmission. The UE may, in operation 1122, determine that a U2N relay discovery message to be newly transmitted is present in a buffer. The UE may, in operation 1123, select a destination identifier of the U2N relay discovery message. The UE may select the destination identifier according to a procedure of [Table 16] below.

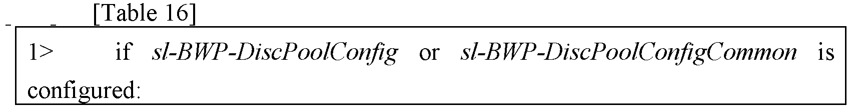

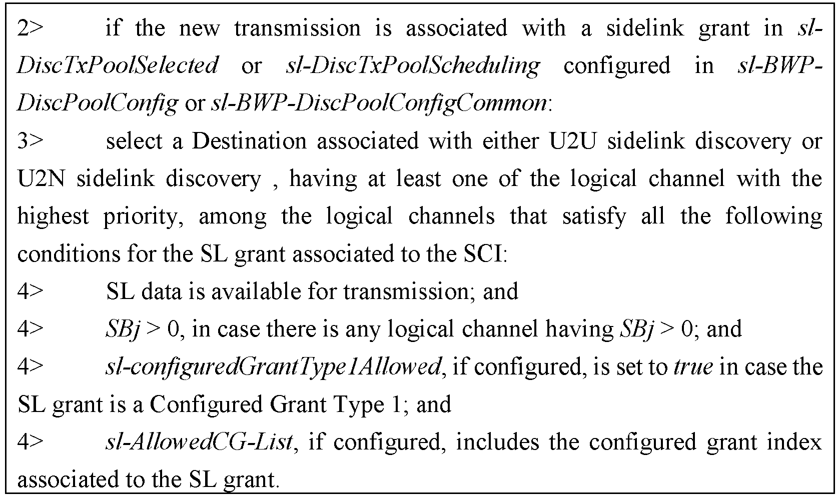

The UE may, in operation 1124, select a logical channel corresponding to the destination identifier selected in operation 1123. The UE may select the logical channel according to a procedure of [Table 17] below.

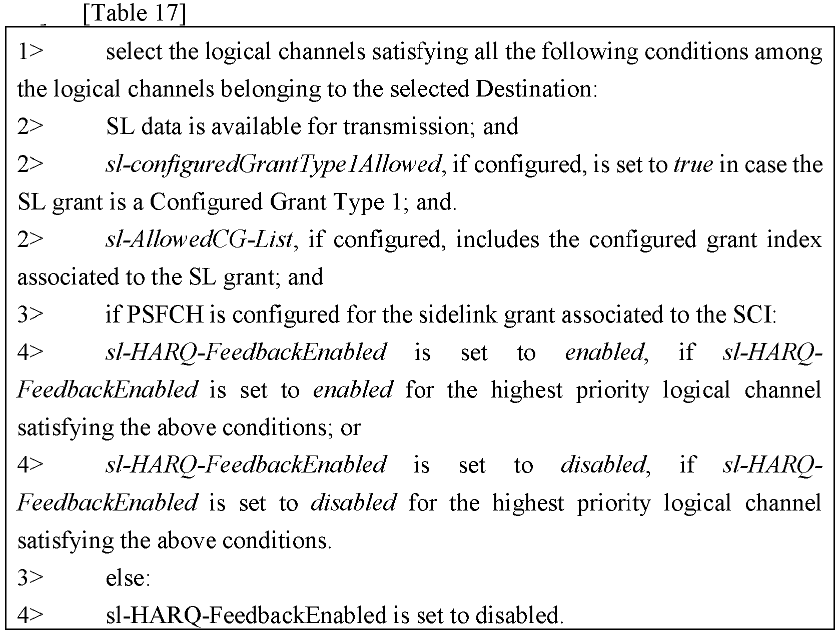

In operation 1125, the UE may perform, as shown in [Table 18] below, an operation of allocating the transmission resource obtained in operation 1121 to the logical channel selected in operation 1124.

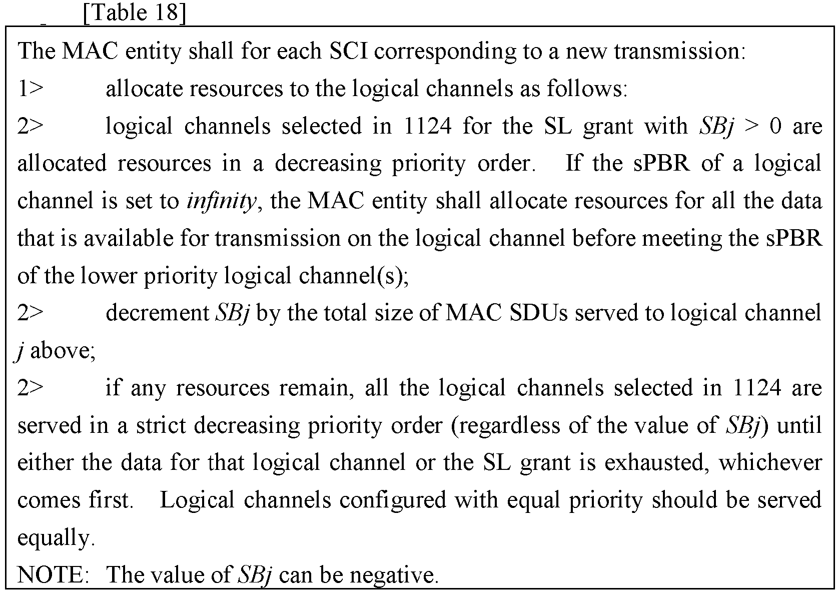

When it is determined that the obtained transmission resource is still available and a U2U relay discovery message having the same destination identifier as the U2N relay discovery message is present in the MAC buffer of the UE, the UE may allocate a logical channel corresponding to the U2U relay discovery message to the obtained transmission resource, configure the U2N relay discovery message and U2U relay discovery message to be the same MAC PDU, and transmit the MAC PDU.

An operation of selecting a destination identifier in a logical channel prioritization procedure performable by a transmission UE for a general sidelink message in embodiments of FIG. 11B and FIG. 11C is as shown in [Table 19] below. An operation of selecting a logical channel identifier for the selected destination identifier may be the same as the procedure of operation 1114 or operation 1124.

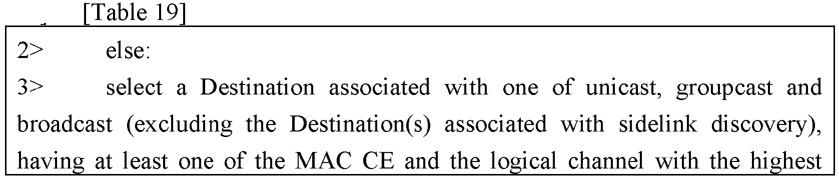

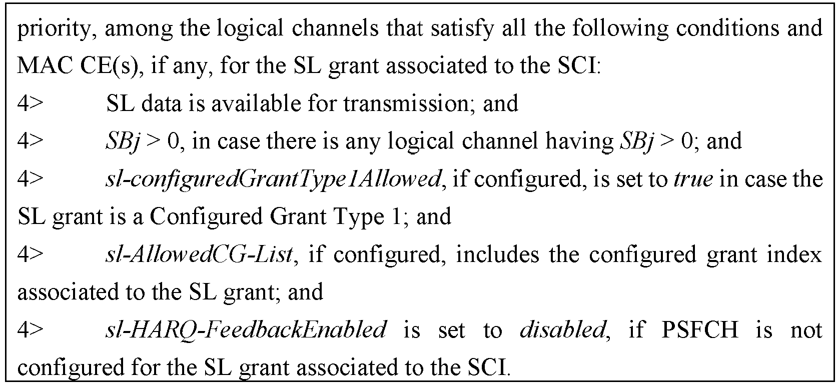

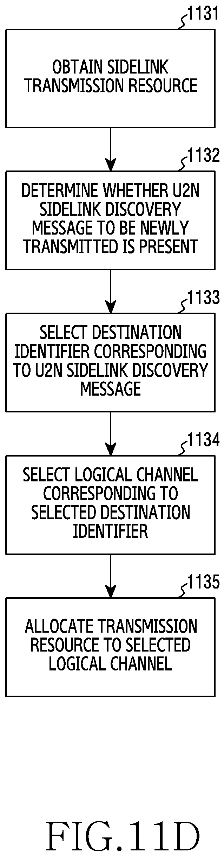

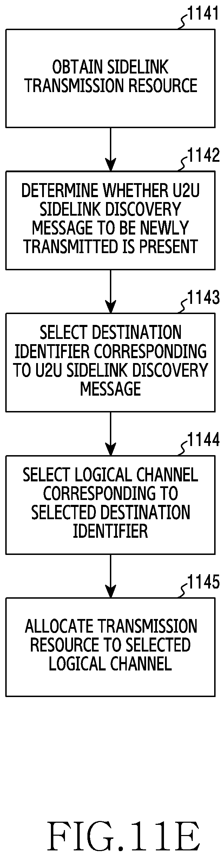

FIG. 11D and FIG. 11E assume a case where a dedicated resource pool is not configured and a general sidelink transmission resource pool is configured for the purpose of sidelink discovery message transmission. A transmission UE may transmit a U2U relay discovery message or U2N relay discovery message by using a transmission resource allocated from a general sidelink transmission resource pool.

FIG. 11D is a diagram illustrating an operation of processing transmission of a sidelink relay discovery message in a wireless communication system in which a UE and another UE perform communication through a sidelink relay according to an embodiment of the disclosure.

Referring to FIG. 11D, a UE may, in operation 1131, determine that a dedicated resource pool for the purpose of U2U relay discovery transmission or a sidelink discovery transmission resource pool has not been configured and determine that a resource has been obtained from a general sidelink transmission resource pool. The UE may, in operation 1132, determine that a U2N relay discovery message to be newly transmitted is present in a buffer. The UE may, in operation 1133, select a destination identifier of the U2N relay discovery message. The UE may select the destination identifier according to [Table 20] below.

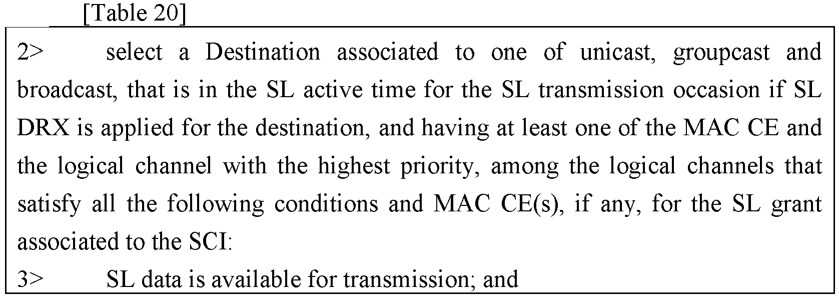

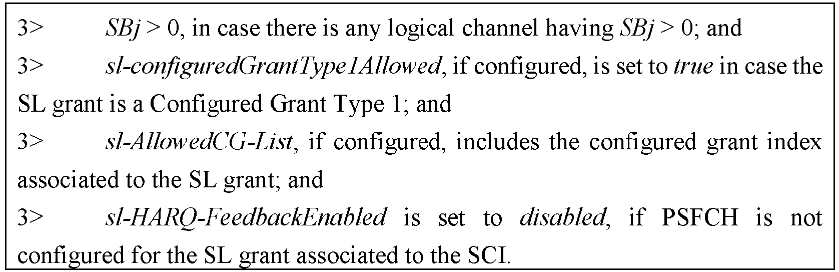

The UE may, in operation 1134, select a logical channel corresponding to the destination identifier selected in operation 1133. The UE may select the logical channel according to [Table 21] below.

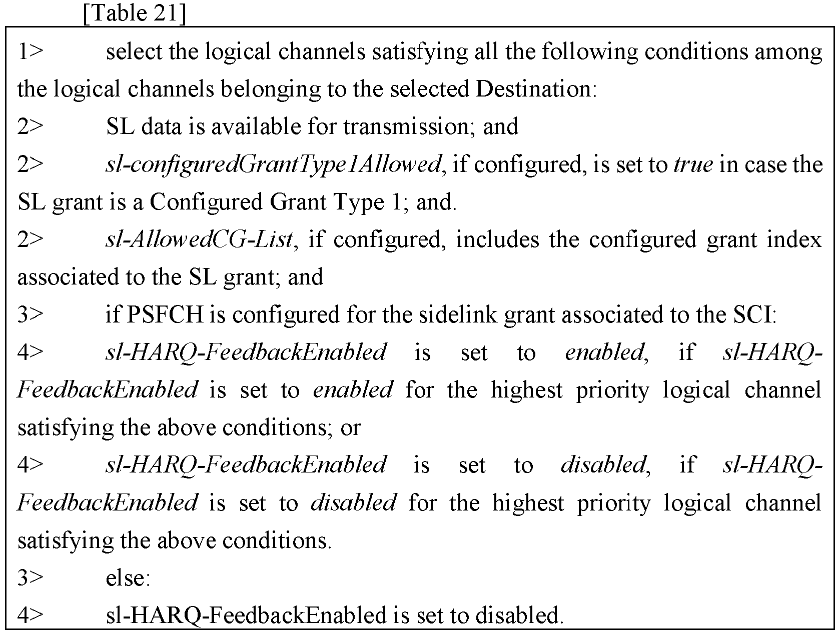

In operation 1135, the UE may perform, as shown in [Table 22] below, an operation of allocating the transmission resource obtained in operation 1131 to the logical channel selected in operation 1134.

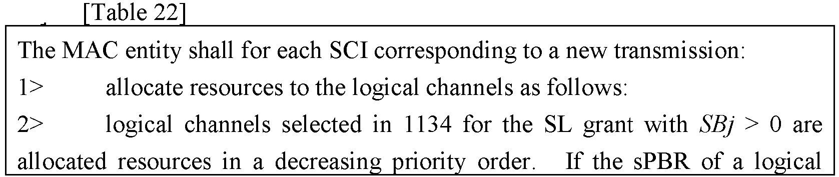

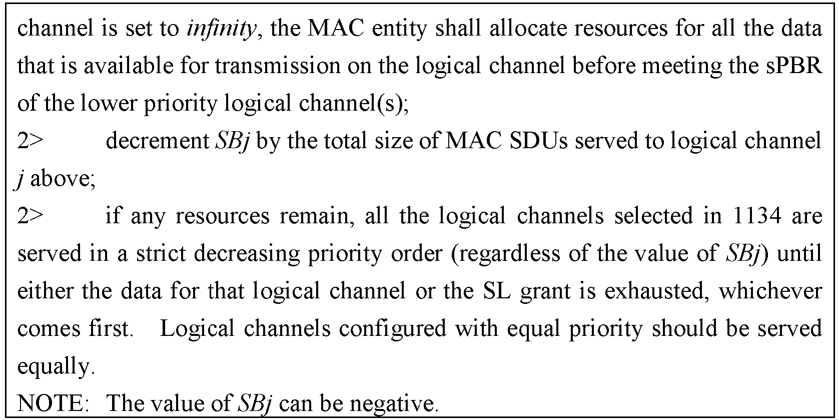

When it is determined that the obtained transmission resource is still available and a U2U relay discovery message having the same destination identifier as the U2N relay discovery message is present in the MAC buffer of the UE, the UE may allocate a logical channel corresponding to the U2U relay discovery message to the obtained transmission resource, configure the U2N relay discovery message and U2U relay discovery message to be the same MAC PDU, and transmit the MAC PDU.

FIG. 11E is a diagram illustrating an operation of processing transmission of a sidelink relay discovery message in a wireless communication system in which a UE and another UE perform communication through a sidelink relay according to an embodiment of the disclosure.

Referring to FIG. 11E, a UE may, in operation 1141, determine that a dedicated resource pool for the purpose of U2U relay discovery transmission or a sidelink discovery transmission resource pool has not been configured and determine that a resource has been obtained from a general sidelink transmission resource pool. The UE may, in operation 1142, determine that a U2U relay discovery message to be newly transmitted is present in a buffer. The UE may, in operation 1143, select a destination identifier of the U2U relay discovery message. The UE may select the destination identifier according to [Table 23] below.

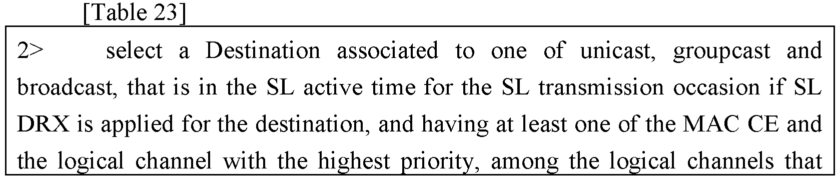

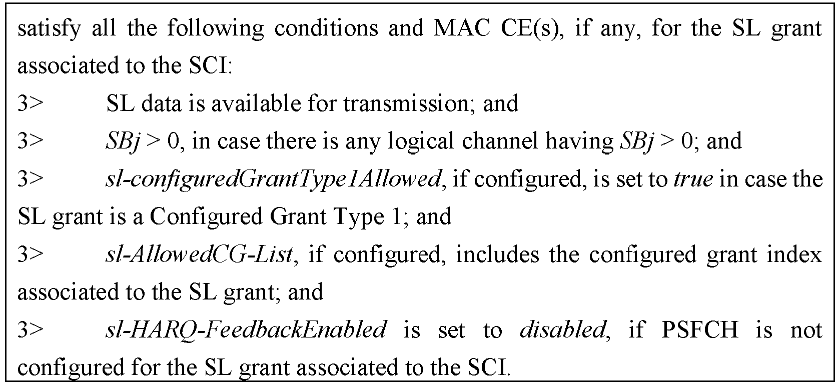

The UE may, in operation 1144, select a logical channel corresponding to the destination identifier selected in operation 1143. The UE may select the logical channel according to [Table 24] below.

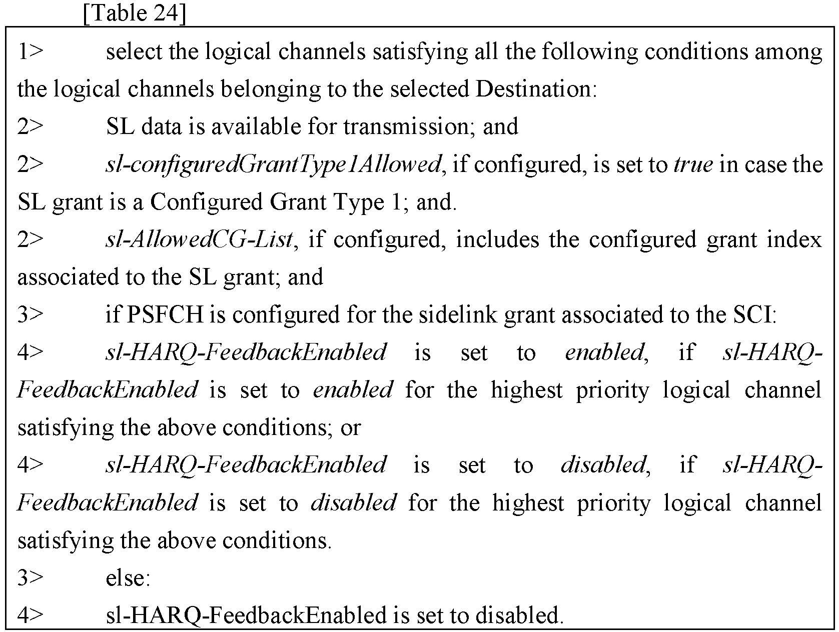

In operation 1145, the UE may perform, as shown in [Table 25] below, an operation of allocating the transmission resource obtained in operation 1141 to the logical channel selected in operation 1144.

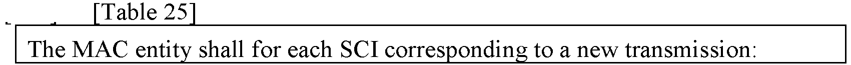

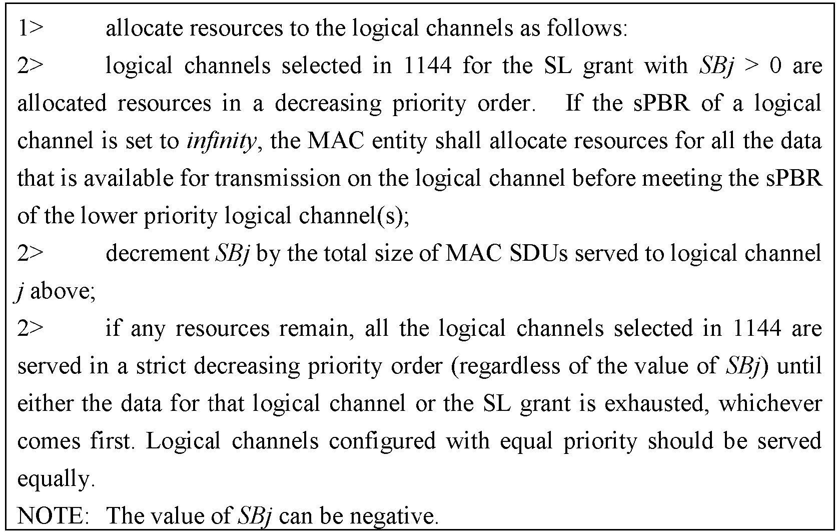

When it is determined that the obtained transmission resource is still available and a U2N relay discovery message having the same destination identifier as the U2U relay discovery message is present in the MAC buffer of the UE, the UE may allocate a logical channel corresponding to the U2N relay discovery message to the obtained transmission resource, configure the U2U relay discovery message and U2N relay discovery message to be the same MAC PDU, and transmit the MAC PDU.

An operation of selecting a resource pool for U2U relay discovery message transmission by a transmission UE in a case where a dedicated resource pool (e.g., *sl-BWP-U2UDiscPoolConfig* or *sl-BWP-U2UDiscPoolConfigCommon*) for the purpose of U2U relay discovery message transmission has been configured according to an embodiment of the disclosure is as shown in [Table 26] below.

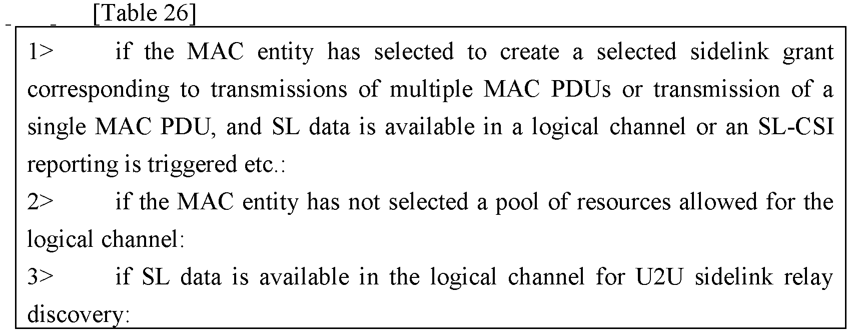

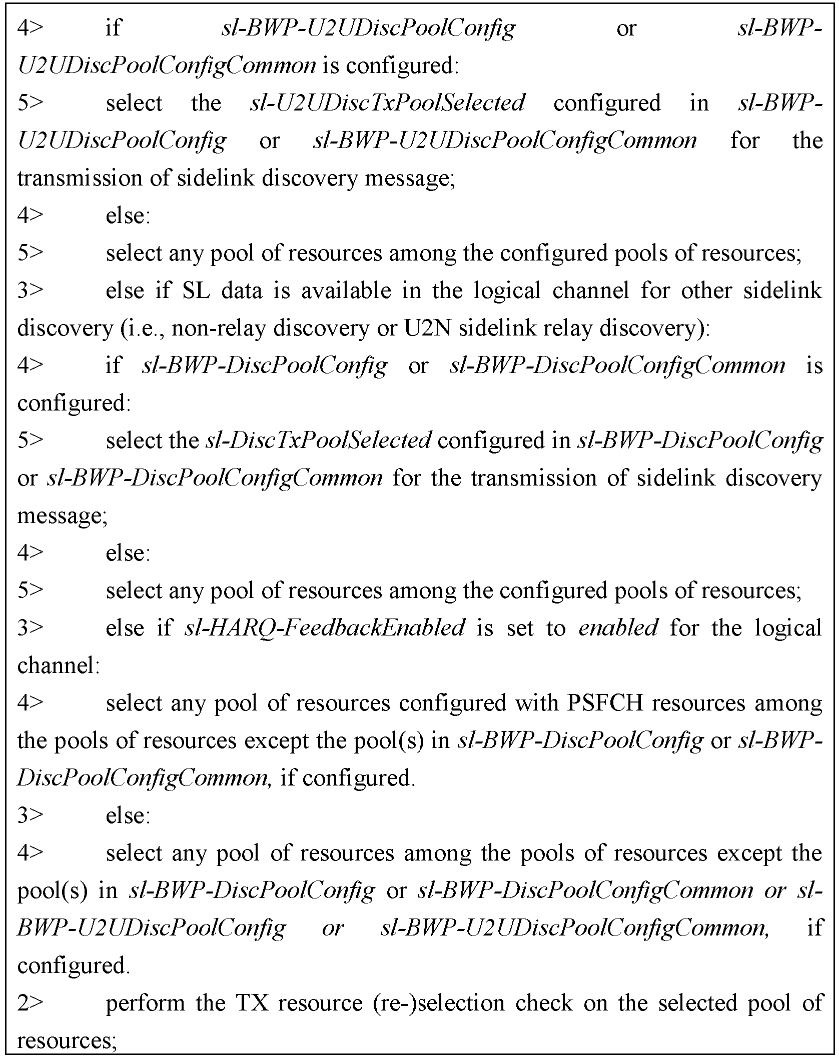

As an embodiment, in a case where a UE is able to support both a U2N relay discovery message and a U2U relay discovery message, it may be configured that distinguishment between a U2N relay discovery message and a U2U relay discovery message is processed in a discovery layer of the UE. As an embodiment, in a case where a UE is able to support both a U2N relay discovery message and a U2U relay discovery message, it may be configured that distinguishment between a U2U relay discovery message and a U2N relay discovery message is processed in a discovery layer of the UE and an RRC layer, a PDCP layer, an RLC layer, and/or a MAC layer of the UE.

A UE transmitting a U2N relay discovery message or a U2U relay discovery message may configure a U2N relay discovery message or a U2U relay discovery message in a discovery layer, and transfer the configured U2N relay discovery message or U2U relay discovery message to a lower layer (PDCP layer). The discovery layer of the UE may, when transmitting a U2N relay discovery message or a U2U relay discovery message to a lower layer, transfer an indicator indicating that the message is a sidelink discovery message to a PDCP layer and an RRC layer corresponding to the lower layer. The indicator that the message is a sidelink discovery message may not include identification for a U2U relay discovery message and identification for a U2N relay discovery message and be applied to a U2U relay discovery message and a U2N relay discovery message as the same sidelink discovery message indicator, or may be applied as a sidelink discovery message indicator capable of identification for a U2U relay discovery message and identification for a U2N relay discovery message.

When the indicator includes identification for a U2N relay discovery message and identification for a U2U relay discovery message, a lower layer (RRC, PDCP, RLC, or MAC) of the UE may process a configuration defined for each discovery message. Even if information enabling identification that a message is a sidelink discovery message is transferred to all the lower layers of the UE, information on identification for a U2U relay discovery message and identification for a U2N relay discovery message may not be transferred to all the lower layers of the UE. When information enabling identification that a message is a sidelink discovery message and/or information on identification for a U2U relay discovery message and identification for a U2N relay discovery message is transferred to a lower layer, for example, according to the embodiment of FIG. 9, RRC may process a configuration of a sidelink signaling radio bearer to be applied to a U2U relay discovery message or a U2N relay discovery message. For example, according to the embodiment of FIG. 9, when a PDCP data PDU is configured, processing of a sidelink signaling radio bearer corresponding to a U2U relay discovery message or a U2N relay discovery message and processing of SDU type information may be performed according to a defined configuration. For example, according to the embodiment of FIG. 9, processing of a logical channel identifier corresponding to a U2U relay discovery message or a U2N relay discovery message may be performed according to a defined configuration. A higher layer of the UE may, while transferring a U2N relay discovery message or U2U relay discovery message to a lower layer, transfer identification information on a sidelink discovery message without identification for the U2N relay discovery message and identification for the U2U relay discovery message or distinguishment between the U2N relay discovery message and the U2U relay discovery message.

If identification for a U2U relay discovery message and identification for a U2N relay discovery message exist separately, the PDCP layer of the UE may perform PDCP data PDU processing configured for a U2N relay discovery message and perform PDCP data PDU processing configured for a U2N relay discovery message (referring to FIG. 9). A U2U relay discovery message or U2N relay discovery message processed in the PDCP layer of the UE may be transferred to the RLC layer, and the U2U relay discovery message or U2N relay discovery message processed in the RLC layer may be transferred to the MAC layer. The MAC layer of the UE may perform processing of a destination identifier or a logical channel identifier corresponding to the U2U relay discovery message, and perform processing of a destination identifier or a logical channel identifier corresponding to the U2N relay discovery message and then transfer the message to a lower layer.

If there is no separate distinguishment between a U2U relay discovery message and a U2N relay discovery message, the PDCP layer of the UE may perform, for the U2U relay discovery message or U2N relay discovery message, PDCP data PDU processing configured for the purpose of sidelink discovery. A U2U relay discovery message and U2N relay discovery message processed in the PDCP layer of the UE may be transferred to the RLC layer, and the U2U relay discovery message and U2N relay discovery message processed in the RLC layer may be transferred to the MAC layer. The MAC layer of the UE may perform processing of a destination identifier or a logical channel identifier corresponding to the U2U relay discovery message and the U2N relay discovery message and transfer a processed MAC PDU to a lower layer. The RLC layer and the MAC layer may perform, for the U2U relay discovery message or the U2N relay discovery message, RLC PDU processing and MAC PDU processing configured for the purpose of sidelink discovery, respectively.

When a reception UE receives a MAC PDU including a U2U relay discovery message or U2N relay discovery message, the reception UE may transfer the MAC SDU to a higher layer of the reception UE. If a MAC layer of the reception UE is able to identify that a message is a sidelink discovery message, identify that a message is a U2U relay discovery message, or identify that a message is a U2N relay discovery message, the UE may, while transferring the message to a higher layer, information on identification for a sidelink discovery message, identification for a U2U relay discovery message, or identification for a U2N relay discovery message.

For example, a PDCP layer of the reception UE may, while transferring a PDCP SDU including a U2U relay discovery message or a U2N relay discovery message to a higher layer (discovery layer), transfer information on identification for a sidelink discovery message, identification for a U2U relay discovery message, or identification for a U2N relay discovery message. In a case where a destination identifier for a U2N relay discovery message and a destination identifier for a U2U relay discovery message are distinguishably used, the MAC layer of the reception UE may distinguish between a U2N relay discovery message and a U2U relay discovery message, based on a destination identifier. In a case where a logical channel identifier for a U2N relay discovery message and a logical channel identifier for a U2U relay discovery message are distinguishably used, the MAC layer of the reception UE may distinguish between a U2N relay discovery message and a U2U relay discovery message, based on a logical channel identifier.

Even when a lower layer (MAC, RLC, PDCP, or RRC layer) of the reception UE transfers identification information to a higher layer without distinguishing between a U2U relay discovery message and a U2N relay discovery message, the discovery layer of the reception UE may distinguish between a U2U relay discovery message and a U2N relay discovery message.

A MAC entity of the reception UE may perform an operation as shown in [Table 27] below to process a U2U relay discovery message.

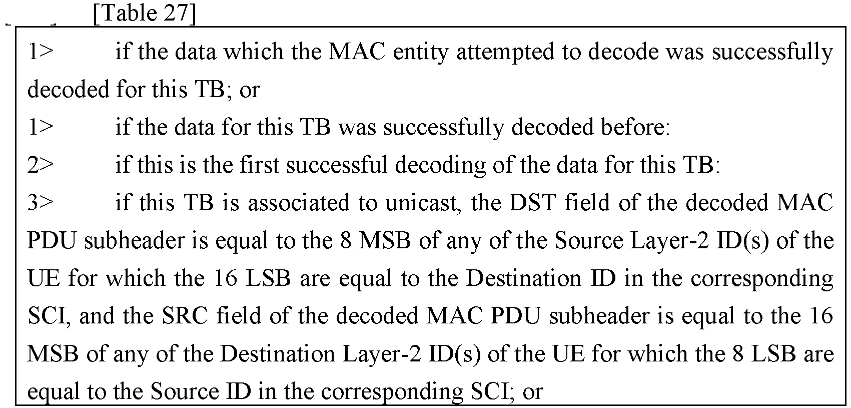

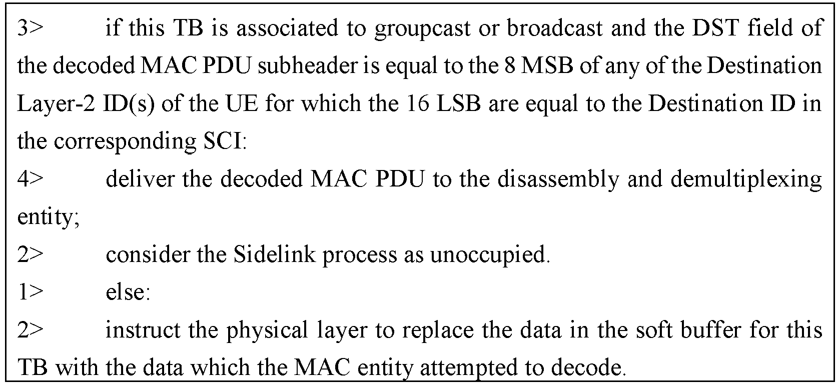

According to an embodiment of the disclosure, a base station may configure support information on a U2U relay in an SIB message. An embodiment of a message including information on a U2U relay supportable by the base station may be as shown in [Table 28] below. The base station may configure, in an SIB message, U2U relay discovery configuration information, and information notifying of layer 2 U2U relay (discovery or relay communication) support or layer 3 U2U relay discovery support.

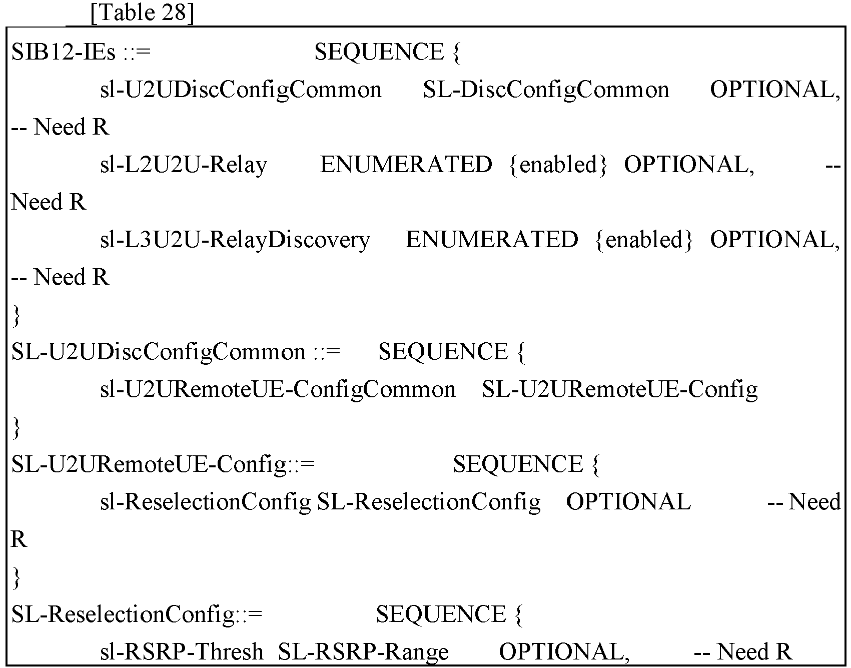

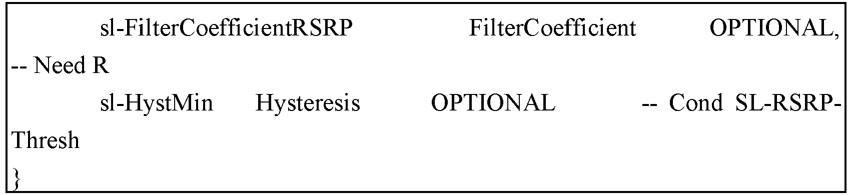

An operation of selecting/reselecting a U2U relay UE by a remote UE supporting U2U relaying according to an embodiment of the disclosure is as shown in an example of [Table 29] below. The operation of selecting/reselecting a U2U relay UE by a remote UE supporting U2U relaying may be applied to a case where a UE selects/reselects a sidelink relay capable of relaying a direct connection with another UE. When a sidelink relay is reselected, the remote UE may apply the quality (SD-RSRP or SL-RSRP) of a sidelink signal with a sidelink relay currently being in connection, and a sidelink relay selection criterion configured in a higher layer (discovery layer or ProSe layer). Configuration information on sidelink signal quality for sidelink relay selection/reselection may be obtained from a base station connected to the remote UE (RRC dedicated message or SIB message) or from a preconfiguration setup.

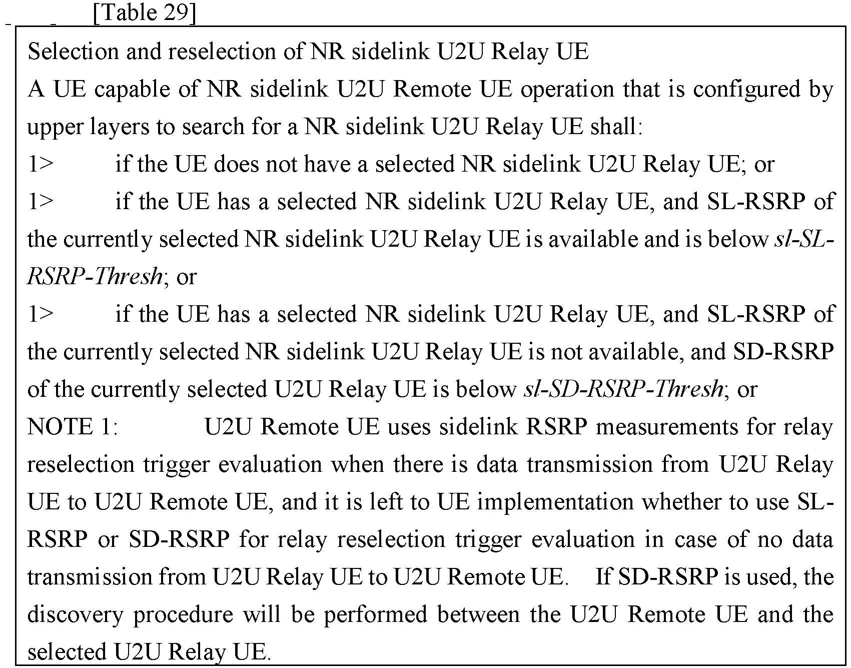

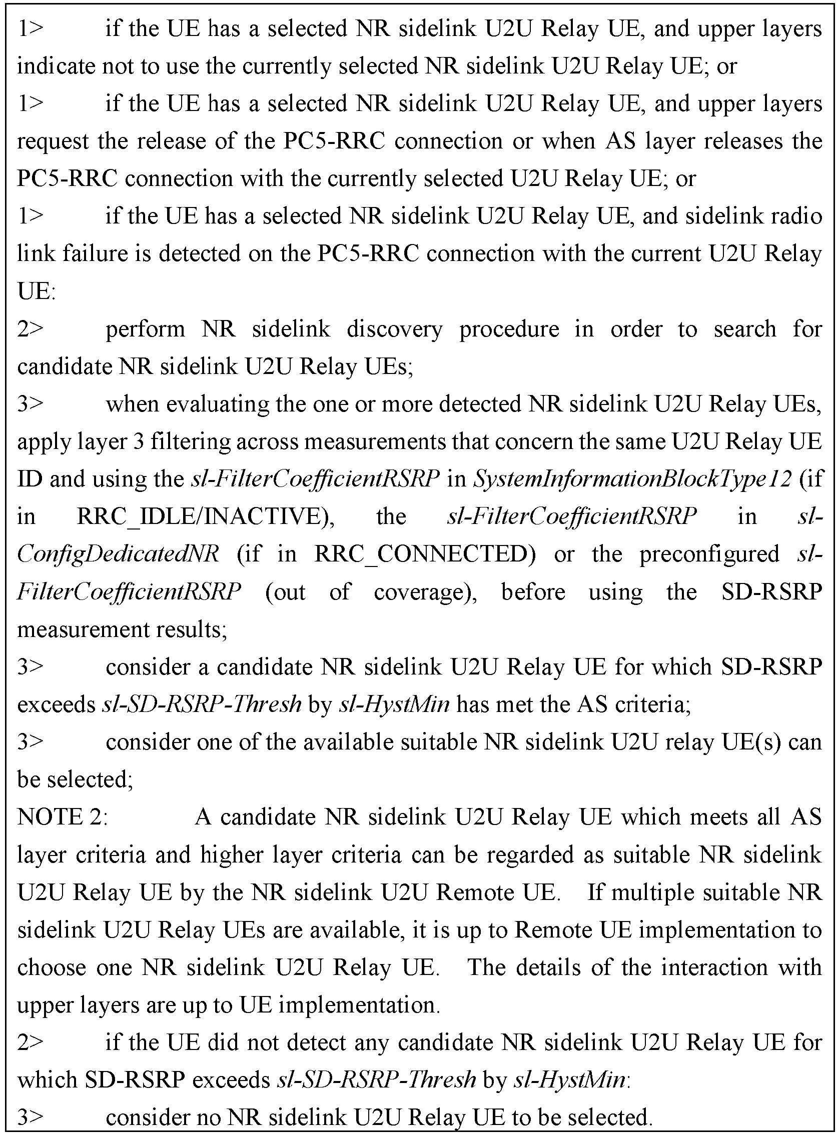

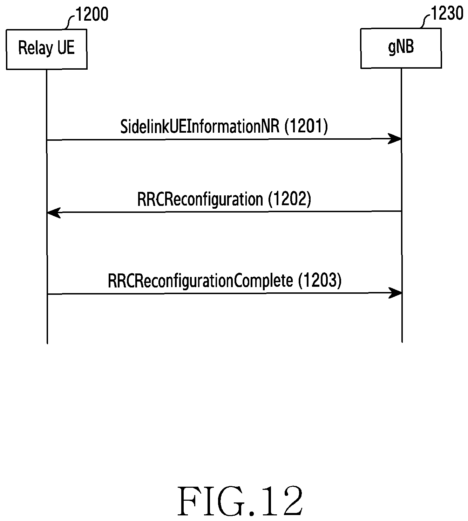

FIG. 12 illustrates a signal flow between a sidelink relay and a base station processing sidelink relay configuration information in a wireless communication system in which a UE and another UE perform communication through the sidelink relay according to an embodiment of the disclosure.

Referring to FIG. 12, a sidelink relay 1200 may determine, according to a configuration (the example of [Table 28]) of an SIB message transmitted by a base station 1230, that the base station supports at least one or a combination of U2U relay discovery and U2U relay communication, and transmit, in operation 1201, a SidelinkUEInformationNR message to request, from the base station 1230, sidelink relay configuration information and sidelink transmission resource information for the at least one or the combination of U2U relay discovery or U2U relay communication. The sidelink relay 1200 may obtain an RRCReconfiguration message from the base station 1230 in operation 1202, and perform an operation of obtaining, from the RRCReconfiguration message, configuration information required for the sidelink relay 1200 to perform a sidelink relay operation for the at least one or the combination of U2U relay discovery or U2U relay communication. The sidelink relay 1200 may transmit, in operation 1203, an RRCReconfigurationComplete message as a response for the RRCReconfiguration message received from the base station 1230.

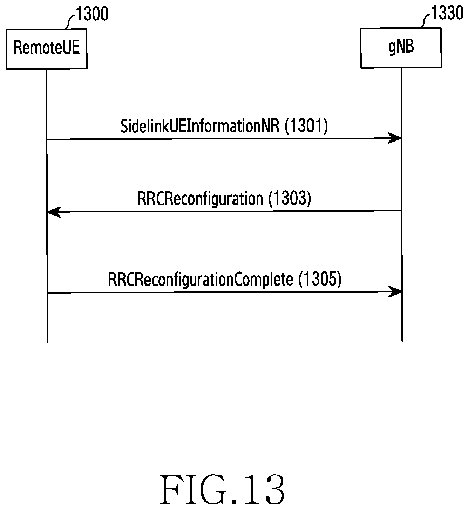

FIG. 13 illustrates a signal flow between a UE and a base station processing sidelink relay configuration information in a wireless communication system in which the UE and another UE perform communication through the sidelink relay according to an embodiment of the disclosure.

Referring to FIG. 13, a remote UE 1300 may determine, according to a configuration (the example of [Table 28]) of an SIB message transmitted by a base station 1330, that the base station supports at least one or a combination of U2U relay discovery and U2U relay communication, and transmit, in operation 1301, a SidelinkUEInformationNR message to request, from the base station 1330, sidelink relay configuration information and sidelink transmission resource information for the at least one or the combination of U2U relay discovery or U2U relay communication. The remote UE 1300 may correspond to a source UE or a destination UE capable of performing direct connection communication by using relay transmission of a sidelink relay.

The remote UE 1300 may obtain an RRCReconfiguration message from the base station 1330 in operation 1302, and perform an operation of obtaining, from the RRCReconfiguration message, configuration information required for the remote UE 1300 to perform a sidelink relay operation for the at least one or the combination of U2U relay discovery or U2U relay communication. The remote UE 1300 may transmit, in operation 1303, an RRCReconfigurationComplete message as a response for the RRCReconfiguration message received from the base station 1330.

A SidelinkUEInformationNR message that is transmitted by the sidelink relay 1200 to the base station 1230 or is transmitted by the remote UE 1300 to the base station 1330 may be used for at least one or a combination of purposes shown in [Table 30] below.

**[Table 30]**

| |
|---|
| U2U sidelink relay discovery TX interest, U2U sidelink relay discovery RX interest, U2U sidelink relay communication TX interest, U2U sidelink relay communication RX interest, U2U relay info, QoS report for SL-SRBx for U2U relay configuration |

Next, an embodiment of a SidelinkUEInformationNR message configured by a sidelink relay or a remote UE to transmit same to a base station according to a purpose of [Table 30] will be described.

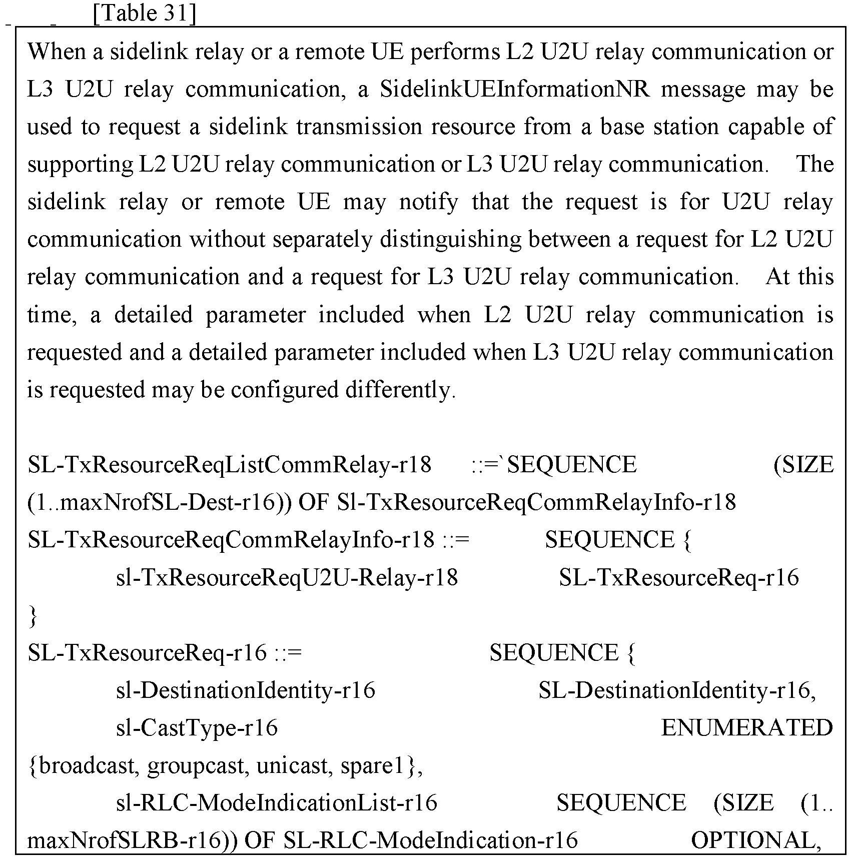

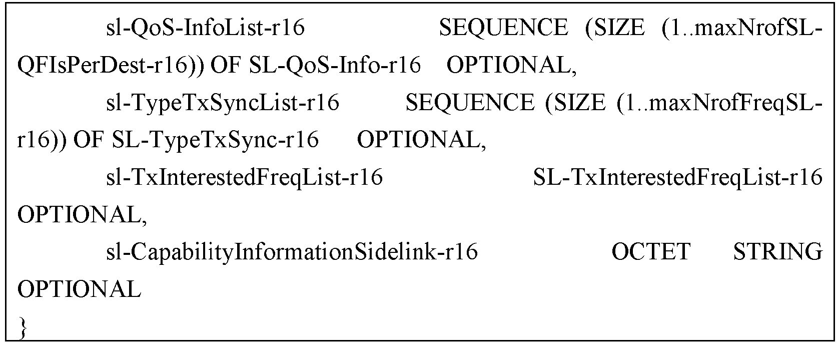

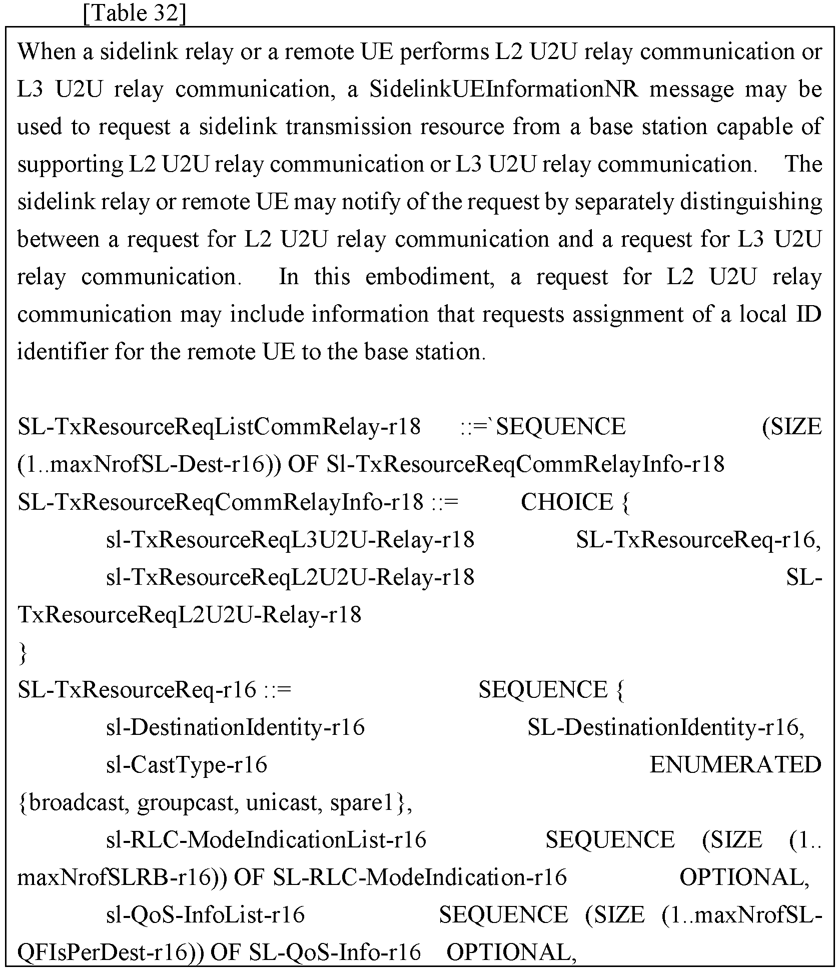

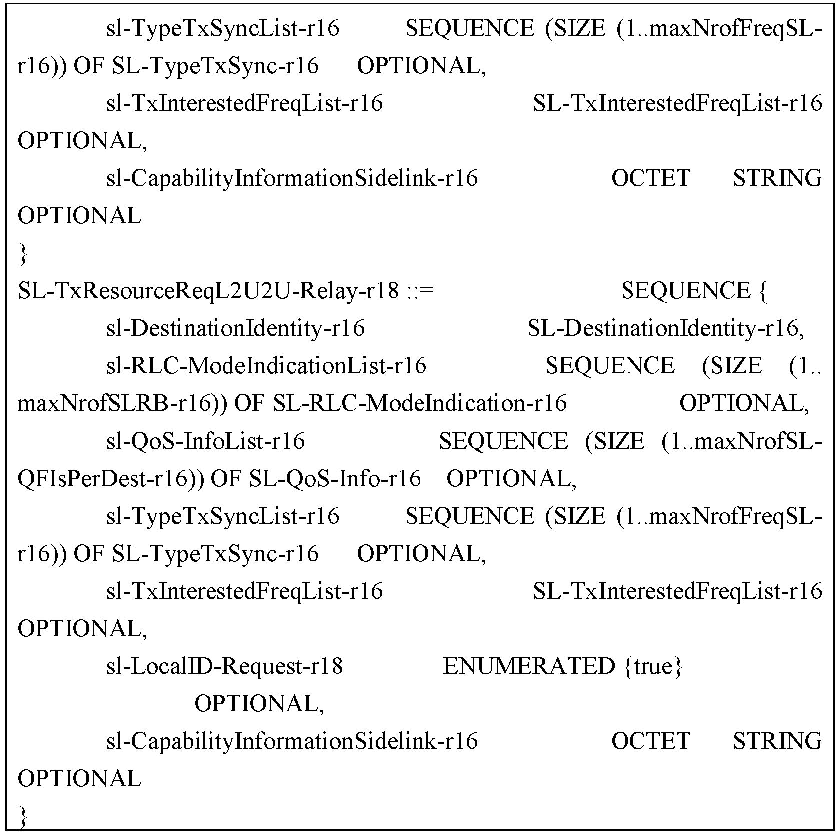

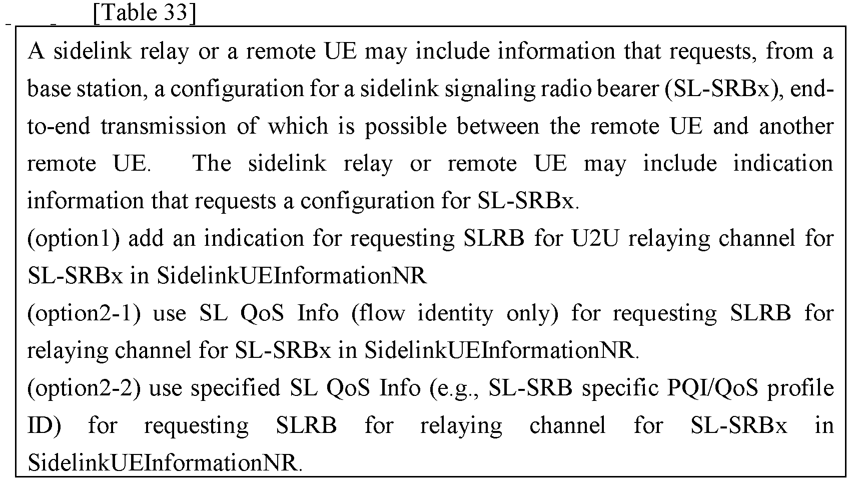

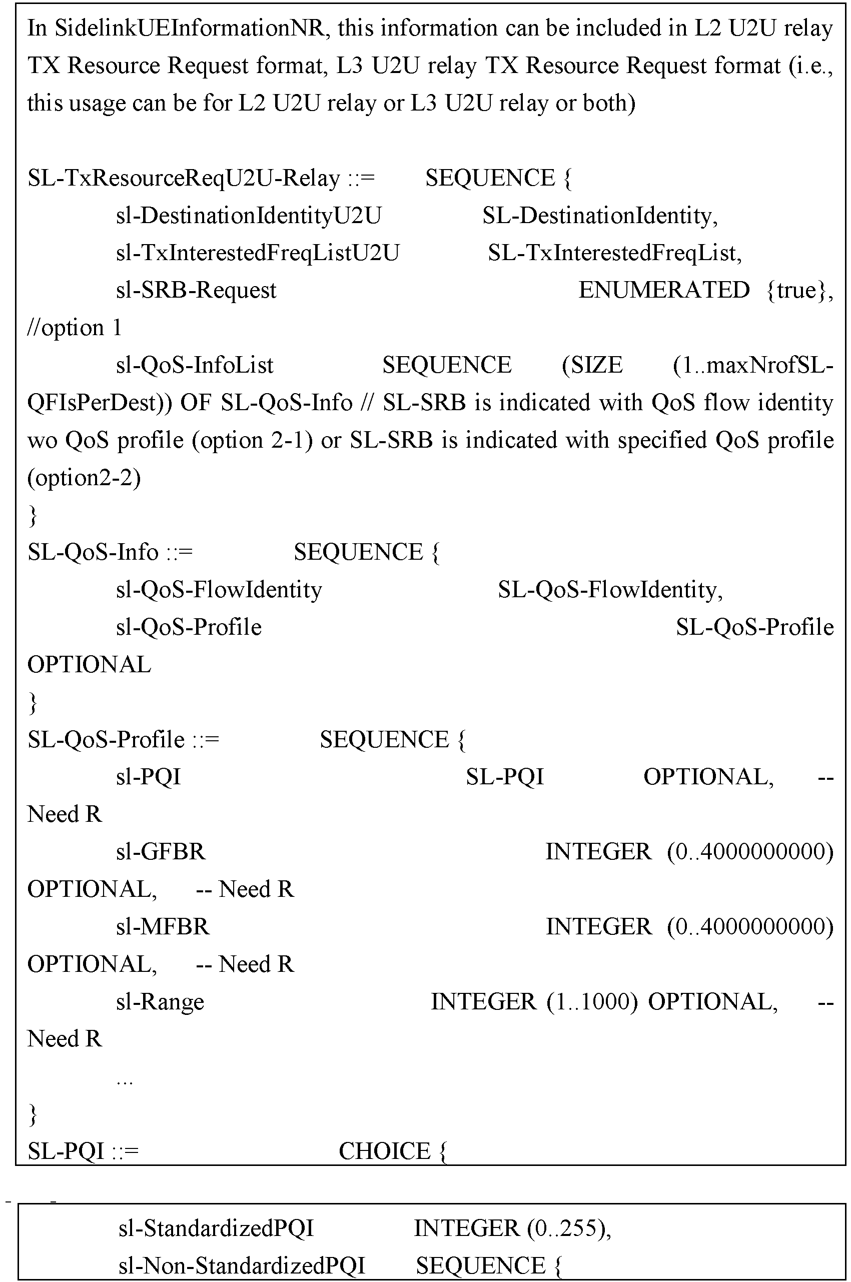

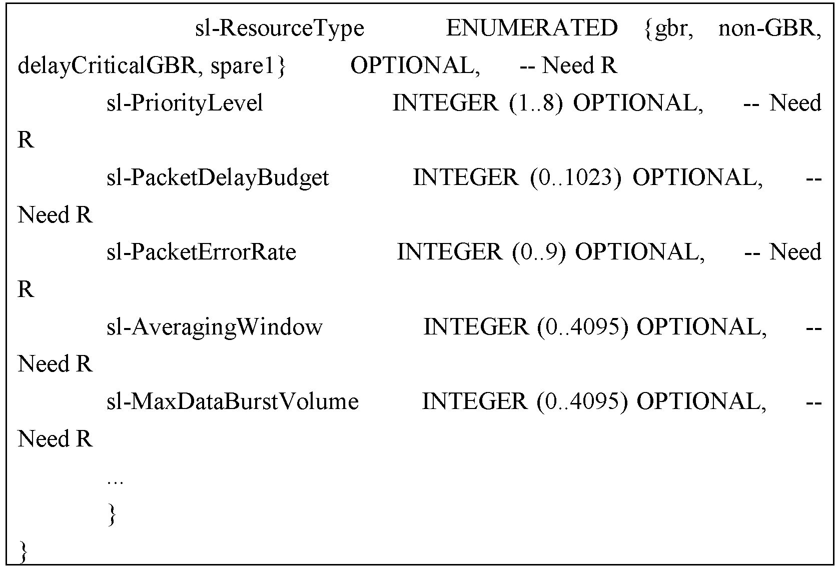

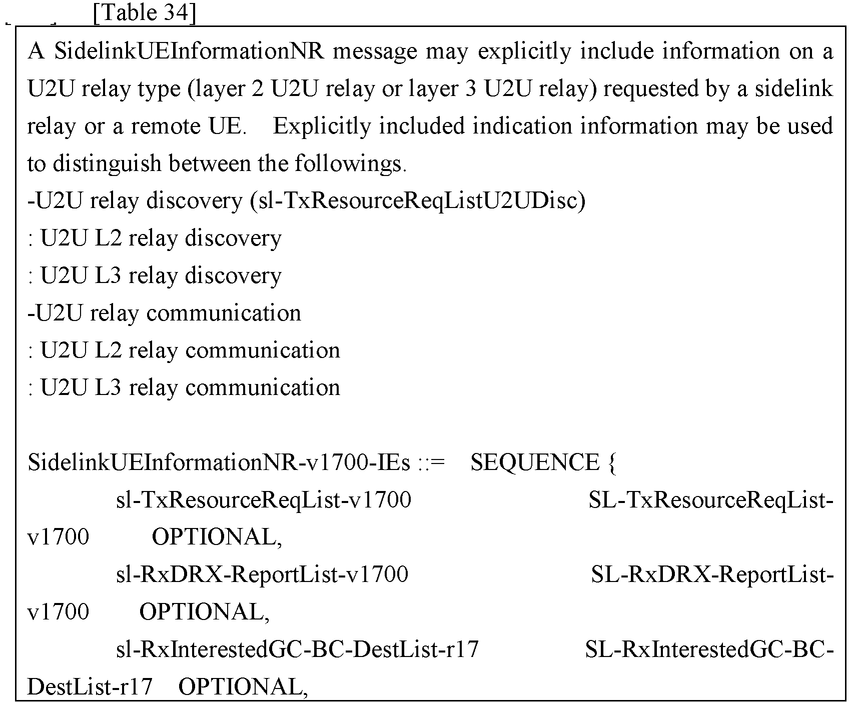

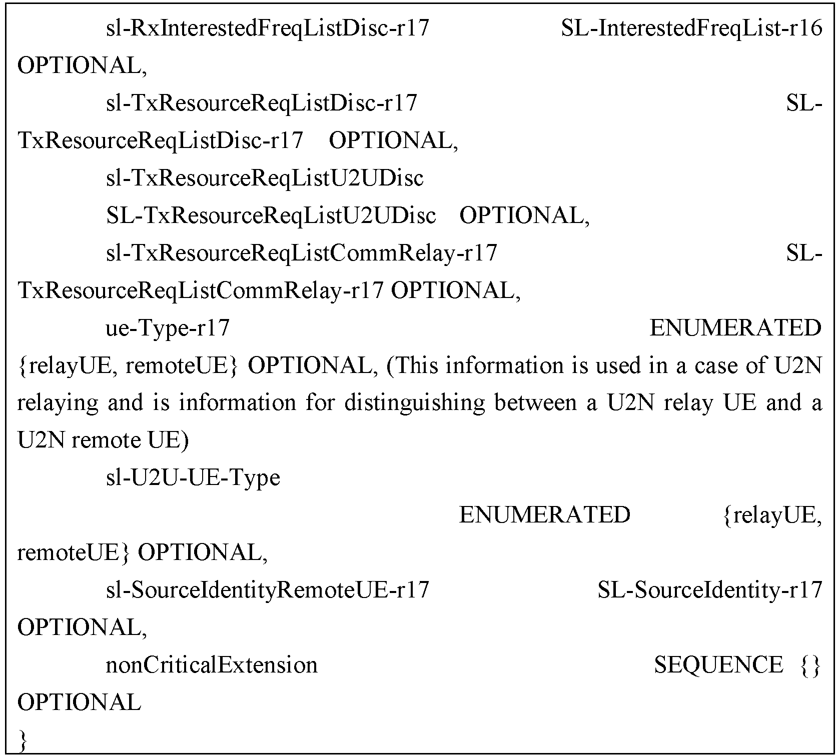

The disclosure relates to a method performed by a user equipment in a wireless communication system. The method may include processing a relay discovery message used to discover a sidelink relay so as to perform direct connection communication with another user equipment, configuring and transmitting a sidelink relay discovery message according to whether a condition for transmitting the relay discovery message used to discover the sidelink relay is satisfied, monitoring and receiving the sidelink relay discovery message according to whether a condition for monitoring the relay discovery message used to discover the sidelink relay is satisfied, and obtaining and processing configuration information for performing a direct connection establishment procedure with the other user equipment through the sidelink relay. The disclosure relates to a method performed by a sidelink relay in a wireless communication system. The method may include processing a relay discovery message used to discover a sidelink relay so as to perform direct connection communication between a user equipment and another user equipment, configuring and transmitting a sidelink relay discovery message according to whether a condition for transmitting the relay discovery message used to discover the sidelink relay is satisfied, monitoring and receiving the sidelink relay discovery message according to whether a condition for monitoring the relay discovery message used to discover the sidelink relay is satisfied, and obtaining and processing configuration information for relay transmission of a direct connection establishment procedure between the user equipment and the other user equipment.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a first user equipment (UE) in a wireless communication system, the method comprising:
transmitting a direct communication request message for a second user equipment to a user equipment (UE)-to-UE (U2U) relay UE, based on sidelink radio bearer (SLRB) configuration information for relaying communication between the first user equipment and the second user equipment;
performing PC5 security configuration for direct communication with the second user equipment;
receiving a direct communication accept message for the second user equipment from the U2U relay UE; and
performing the direct communication with the second user equipment through the U2U relay UE.

2. The method of claim 1, wherein the SLRB configuration information comprises configuration information on at least one of a sidelink signaling radio bearer (SL-SRB) or a sidelink data radio bearer (SL-DRB), and
wherein the SLRB configuration information is included in a radio resource control (RRC) message or a system information block (SIB) message received from a base station, is included in radio bearer configuration information pre-configured in the first user equipment, or is configured based on specified SLRB configuration information.

3. The method of claim 1, wherein the SLRB configuration information comprises sidelink radio link control (RLC) bearer configuration information, and
wherein the sidelink RLC bearer configuration information is determined according to an RLC mode of an SL-SRB.

4. The method of claim 3, wherein the sidelink RLC bearer configuration information comprises:
configuration information on a first SL-SRB to which an unacknowledged mode RLC (UM RLC) mode is to be applied and configuration information on a second SL-SRB to which an acknowledged mode RLC (AM RLC) mode is to be applied;
configuration information for applying the AM RLC mode to all SL-SRBs to which the sidelink RLC bearer configuration information is to be applied; or
configuration information for applying the UM RLC mode to all SL-SRBs to which the sidelink RLC bearer configuration information is to be applied.

5. A method performed by a user equipment (UE)-to-UE (U2U) relay UE in a wireless communication system, the method comprising:
receiving, from a first user equipment, a direct communication request message for a second user equipment, based on sidelink radio bearer (SLRB) configuration information;
transmitting the direct communication request message to the second user equipment;
receiving, from the second user equipment, a direct communication accept message including communication response information of the second user equipment responding to the direct communication request message, and transferring the direct communication accept message to the first user equipment; and
relaying direct communication between the first user equipment and the second user equipment,
wherein the SLRB configuration information indicates a wireless resource used by the U2U relay UE to relay communication between the first user equipment and the second user equipment.

6. The method of claim 5, wherein the SLRB configuration information comprises configuration information on at least one of a sidelink signaling radio bearer (SL-SRB) or a sidelink data radio bearer (SL-DRB), and
wherein the SLRB configuration information is included in a radio resource control (RRC) message or a system information block (SIB) message received from a base station, is included in radio bearer configuration information pre-configured in the first user equipment, or is configured based on specified SLRB configuration information.

7. The method of claim 5, wherein the SLRB configuration information comprises sidelink radio link control (RLC) bearer configuration information, and
wherein the sidelink RLC bearer configuration information is determined according to an RLC mode of an SL-SRB.

8. The method of claim 7, wherein the sidelink RLC bearer configuration information comprises:
configuration information on a first SL-SRB to which an unacknowledged mode RLC (UM RLC) mode is to be applied and configuration information on a second SL-SRB to which an acknowledged mode RLC (AM RLC) mode is to be applied;
configuration information for applying the AM RLC mode to all SL-SRBs to which the sidelink RLC bearer configuration information is to be applied; or
configuration information for applying the UM RLC mode to all SL-SRBs to which the sidelink RLC bearer configuration information is to be applied.

9. A first user equipment (UE) in a wireless communication system, the first user equipment comprising:
a transceiver; and
a controller coupled to the transceiver,
wherein the controller is configured to:
transmit a direct communication request message for a second user equipment to a user equipment (UE)-to-UE (U2U) relay UE, based on sidelink radio bearer (SLRB) configuration information for relaying communication between the first user equipment and the second user equipment;
perform PC5 security configuration for direct communication with the second user equipment;
receive a direct communication accept message for the second user equipment from the U2U relay UE; and
perform the direct communication with the second user equipment through the U2U relay UE.

10. The first user equipment of claim 9, wherein the SLRB configuration information comprises configuration information on at least one of a sidelink signaling radio bearer (SL-SRB) or a sidelink data radio bearer (SL-DRB), and
wherein the SLRB configuration information is included in a radio resource control (RRC) message or a system information block (SIB) message received from a base station, is included in radio bearer configuration information pre-configured in the first user equipment, or is configured based on specified SLRB configuration information.

11. The first user equipment of claim 9, wherein the SLRB configuration information comprises sidelink radio link control (RLC) bearer configuration information, and
wherein the sidelink RLC bearer configuration information is determined according to an RLC mode of an SL-SRB.

12. The first user equipment of claim 11, wherein the sidelink RLC bearer configuration information comprises:
configuration information on a first SL-SRB to which an unacknowledged mode RLC (UM RLC) mode is to be applied and configuration information on a second SL-SRB to which an acknowledged mode RLC (AM RLC) mode is to be applied;
configuration information for applying the AM RLC mode to all SL-SRBs to which the sidelink RLC bearer configuration information is to be applied; or
configuration information for applying the UM RLC mode to all SL-SRBs to which the sidelink RLC bearer configuration information is to be applied.

13. A user equipment (UE)-to-UE (U2U) relay UE in a wireless communication system, the U2U relay UE comprising:
a transceiver; and
a controller coupled to the transceiver,
wherein the controller is configured to:
receive, from a first user equipment, a direct communication request message for a second user equipment, based on sidelink radio bearer (SLRB) configuration information;
transmit the direct communication request message to the second user equipment;
receive, from the second user equipment, a direct communication accept message including communication response information of the second user equipment responding to the direct communication request message, and transfer the direct communication accept message to the first user equipment; and
relay direct communication between the first user equipment and the second user equipment, and
wherein the SLRB configuration information indicates a wireless resource used by the U2U relay UE to relay communication between the first user equipment and the second user equipment.

14. The U2U relay UE of claim 13, wherein the SLRB configuration information comprises configuration information on at least one of a sidelink signaling radio bearer (SL-SRB) or a sidelink data radio bearer (SL-DRB), and
wherein the SLRB configuration information is included in a radio resource control (RRC) message or a system information block (SIB) message received from a base station, is included in radio bearer configuration information pre-configured in the first user equipment, or is configured based on specified SLRB configuration information.

15. The U2U relay UE of claim 13, wherein the SLRB configuration information comprises sidelink radio link control (RLC) bearer configuration information, and
wherein the sidelink RLC bearer configuration information is determined according to an RLC mode of an SL-SRB and comprises:
configuration information on a first SL-SRB to which an unacknowledged mode RLC (UM RLC) mode is to be applied and configuration information on a second SL-SRB to which an acknowledged mode RLC (AM RLC) mode is to be applied;
configuration information for applying the AM RLC mode to all SL-SRBs to which the sidelink RLC bearer configuration information is to be applied; or
configuration information for applying the UM RLC mode to all SL-SRBs to which the sidelink RLC bearer configuration information is to be applied.
